(19) Europäisches Patentamt
European Patent Office
Office européen des brevets

(11) EP 0 739 950 B1

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.[7]: **C09B 62/04**, C09B 62/002, D06P 1/38

(21) Anmeldenummer: **96810238.4**

(22) Anmeldetag: **16.04.1996**

(54) **Reaktivfarbstoffe der Dioxazinreihe, ihre Herstellung und Verwendung**

Reactive dioxazine dye stuffs, their preparation and use

Colorants réactifs dioxaziniques, leur préparation et leur utilisation

(84) Benannte Vertragsstaaten:
**BE CH DE ES FR GB IT LI PT**

(30) Priorität: **25.04.1995 CH 117595**

(43) Veröffentlichungstag der Anmeldung:
**30.10.1996 Patentblatt 1996/44**

(73) Patentinhaber: **Ciba Specialty Chemicals Holding Inc.**
**4057 Basel (CH)**

(72) Erfinder:
- **Reichert, Hans, Dr.**
  **79618 Rheinfelden (DE)**
- **Müller, Bernhard, Dr.**
  **79588 Effringen-Kirchen (DE)**

(56) Entgegenhaltungen:
**EP-A- 0 101 665**
**DE-A- 2 600 490**
**US-A- 5 122 605**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Reaktivfarbstoffe der Dioxazinreihe, Verfahren zu ihrer Herstellung und ihre Verwendung.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

DE-A-2 600 490 und EP-A-101 665 offenbaren Reaktivfarbstoffe analog den vorliegenden Verbindungen, unterscheiden sich von diesen jedoch in den Spacern gemäß den vorliegenden Definitionen Z und Z'.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungs stabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind Verbindungen der Formel

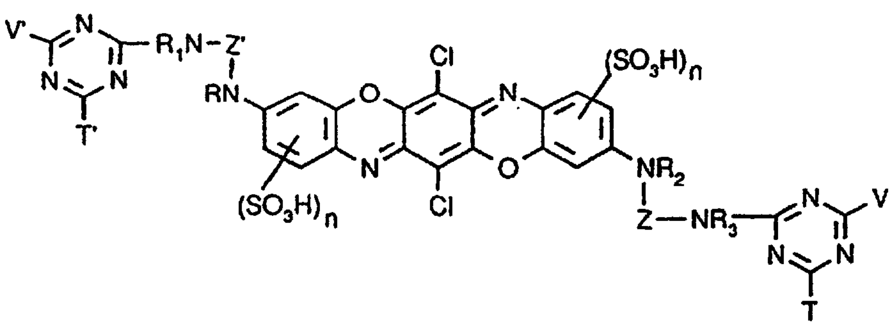

(1),

worin

R, $R_1$, $R_2$ und $R_3$ unabhängig voneinander je Wasserstoff oder gegebenenfalls durch Hydroxy, Sulfo, Sulfato, Carboxy, Cyano, Halogen, $C_1$-$C_4$-Alkoxycarbonyl oder Carbamoyl substituiertes $C_1$-$C_6$-Alkyl bedeuten,

Z und Z' unabhängig voneinander je für verzweigtes $C_3$-$C_6$ Alkylen stehen,

T und T' unabhängig voneinander je für Chlor, Fluor, Brom, 3-Carboxypyridin-1-yl oder 3-Carbamoylpyridin-1-yl stehen,

V und V' unabhängig voneinander je für Amino; unsubstituiertes oder durch Sulfo, Sulfato, Hydroxy, Carboxy oder Phenyl substituiertes N-$C_1$-$C_4$-Alkylamino oder N,N-Di-$C_1$-$C_4$-Alkylamino; Cyclohexylamino; unsubstituiertes oder durch $C_1$-$C_4$-Alkyl, $C_1$-$C_4$-Alkoxy, Amino, $C_2$-$C_4$-Alkanoylamino, Carboxy, Sulfo oder Halogen substituiertes Phenylamino oder Naphthylamino; unsubstituiertes oder im Alkylteil durch Sulfo, Sulfato, Hydroxy, Carboxy oder Phenyl substituiertes und/oder im Phenylteil durch $C_1$-$C_4$-Alkyl, $C_1$-$C_4$-Alkoxy, Amino, $C_2$-$C_4$-Alkanoylamino, Carboxy, Sulfo oder Halogen substituiertes N-$C_1$-$C_4$-Alkyl-N-phenylamino; Morpholino; oder für einen Reaktivrest der Formel

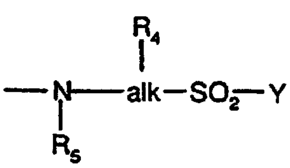

(2a)

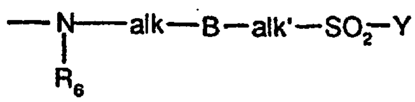 (2b)

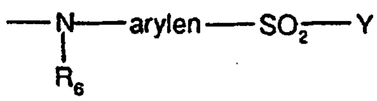 (2c)

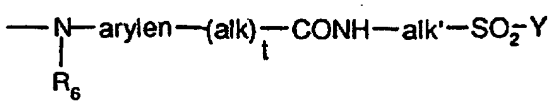 (2d)

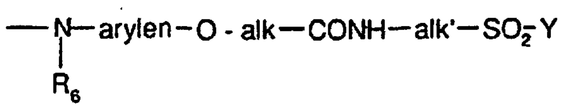 (2e)

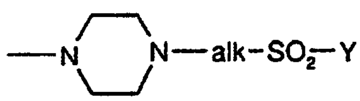 (2f)

oder

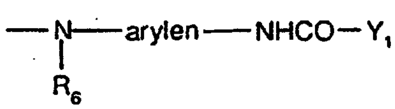 (2g)

stehen,
$R_4$ Wasserstoff, Hydroxy, Sulfo, Sulfato, Carboxy, Cyano, Halogen, $C_1$-$C_4$-Alkoxycarbonyl, Carbamoyl oder eine Gruppe $-SO_2$-Y ist,
$R_5$ Wasserstoff, gegebenenfalls durch Hydroxy, Sulfo, Sulfato, Carboxy oder Cyano substituiertes $C_1$-$C_4$-Alkyl ist,
$R_6$ für Wasserstoff oder $C_1$-$C_4$-Alkyl steht,
alk und alk' unabhängig voneinander je $C_1$-$C_6$-Alkylen sind,
arylen einen unsubstituierten oder durch Sulfo, Carboxy, Hydroxy, $C_1$-$C_4$-Alkyl, $C_1$-$C_4$-Alkoxy oder Halogen substituierten Phenylen- oder Naphthylenrest bedeutet,
Y Vinyl oder einen Rest $-CH_2$-$CH_2$-U bedeutet und U eine Abgangsgruppe ist,
$Y_1$ für eine Gruppe $-CHX$-$CH_2X$ oder $-CX=CH_2$ steht,
X Chlor oder Brom bedeutet,
B ein Rest -O- oder $-NR_6$-, worin $R_6$ die oben angegebene Bedeutung hat, ist, und
n und t unabhängig voneinander je für die Zahl 0 oder 1 stehen.

Der Begriff Sulfo umfasst hierbei generell sowohl die freie Säure $-SO_3H$ als auch eine beliebige Salzform, z.

B. ein Alkali-, Erdalkali- oder Ammoniumsalz oder das Salz eines organischen Amins wie etwa das Natrium-, Kalium-, Lithium- oder Ammoniumsalz, das Salz des Triethanolamins oder zwei oder mehrere verschiedene solcher Kationen enthaltende Mischsalze, z.B. Na/Li-, Na/$NH_4$- oder Na/Li/$NH_4$-Mischsalze. Die Verbindungen der Formel (1) enthalten mindestens eine und vorzugsweise mindestens zwei Sulfogruppen.

$C_1$-$C_4$-Alkyl bedeutet generell Methyl, Ethyl, n- oder iso-Propyl oder n-, iso-, sec.- oder tert.-Butyl. $C_1$-$C_4$-Alkoxy bedeutet generell Methoxy, Ethoxy, n- oder iso-Propoxy oder n-, iso-, sec.- oder tert.-Butoxy. Halogen steht generell z.B. für Fluor, Chlor oder Brom. Beispiele für $C_1$-$C_4$-Alkoxycarbonyl sind Methoxycarbonyl und Ethoxycarbonyl. Beispiele für $C_1$-$C_4$-Alkylthio sind Methylthio und Ethylthio. Beispiele für $C_2$-$C_4$-Alkanoylamino sind Acetylamino und Propionylamino.

R, $R_1$, $R_2$ oder $R_3$ bedeuten durch Hydroxy, Sulfo, Sulfato, Carboxy, Cyano, Halogen, $C_1$-$C_4$-Alkoxycarbonyl oder Carbamoyl substituiertes $C_1$-$C_6$-Alkyl. Bei $C_1$-$C_6$-Alkyl kann es sich um Methyl, Ethyl, n- oder iso-Propyl, n-, sec-, tert.- oder iso-Butyl oder um geradkettiges oder verzweigtes Pentyl oder Hexyl handeln.

R, $R_1$, $R_2$ und $R_3$ stehen unabhängig voneinander je bevorzugt für Wasserstoff oder $C_1$-$C_4$-Alkyl, besonders bevorzugt für Wasserstoff, Methyl oder Ethyl und insbesondere bevorzugt je für Wasserstoff.

Beispiele für verzweigte $C_3$-$C_6$ Alkylenreste Z und Z' sind 1,2-Propylen, 1,1-Dimethylethylen-1,2, 2-Methylpentylen-1,5 oder 1,2-Dimethylethylen-1,2,2,2-Dimethylpropylen-1,3, 1-Ethylpropylen-1,3. Z und Z' stehen unabhängig voneinander je bevorzugt für 1,2-Propylen oder 2,2-Dimethylpropylen-1,3. Die Reste Z und Z' können verschieden oder vorzugsweise gleich sein.

T und T' bedeuten unabhängig voneinander bevorzugt je Chlor oder Fluor. Die Reste T und T' können verschieden oder vorzugsweise gleich sein.

Beispiele für geeignete nicht-reaktive Reste V und V' sind Amino, Methylamino, Ethylamino, β-Hydroxyethylamino, N,N-Di-ß-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2-oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, oder N-β-Hydroxyethyl-N-phenylamino.

V und V' stehen als nicht-reaktiver Rest unabhängig voneinander je bevorzugt für Amino, unsubstituiertes oder durch Hydroxy, Sulfo oder Sulfato substituiertes N-Mono- oder N,N-Di-$C_1$-$C_2$-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy, Sulfo oder Sulfato substituiertes N-$C_1$-$C_2$-Alkyl-N-phenylamino oder für Morpholino und besonders bevorzugt für Amino, unsubstituiertes oder durch Sulfo substituiertes N-Mono- oder N, N-Di-$C_1$-$C_2$-Alkylamino, durch 1 bis 3 gleiche Reste aus der Gruppe Methyl, Methoxy und Sulfo substituiertes Phenylamino oder für 1 bis 3 Sulfogruppen tragendes 1- oder 2-Naphthylamino. Insbesonders bevorzugte nicht-reaktive Bedeutungen von V und V' sind unabhängig voneinander durch 1 bis 3 gleiche oder verschiedene Substituenten aus der Gruppe Sulfo, Methyl und Methoxy substituiertes Phenylamino oder durch 1 oder 2 Sulfogruppen substituiertes 2-Naphthylamino und hierbei insbesondere die Reste 2-, 3- oder 4-Sulfophenylamino, 2,4- oder 2,5-Disulfophenylamino, 2,5-Disulfo-4-methoxyphenylamino, 1-Sulfo-2-naphthylamino oder 1,5-Disulfo-2-naphthylamino.

Handelt es sich bei V oder V' um einen Reaktivrest der Formel (2a) - (2g), so bedeuten alk und alk' unabhängig voneinander je z.B. Methylen, 1,2-Ethylen, 1,3-Propylen, 1,4-Butylen, 1,5-Pentylen, 1,6-Hexylen oder deren verzweigte Isomere. alk und alk' stehen unabhängig voneinander je bevorzugt für einen $C_1$-$C_4$-Alkylenrest und besonders bevorzugt für einen Ethylen- oder Propylenrest.

Bevorzugte Bedeutungen von arylen sind ein unsubstituierter oder durch Sulfo, Methyl, Methoxy oder Carboxy substituierter 1,3- oder 1,4-Phenylenrest und insbesondere ein unsubstituierter 1,3- oder 1,4-Phenylenrest.

Bedeutet Y einen Rest $-CH_2-CH_2-U$, so kann es sich bei der Abgangsgruppe U z.B. um -Cl, -Br, -F, $-OSO_3H$, $-SSO_3H$, $-OCO-CH_3$, $-OPO_3H_2$, $-OCO-C_6H_5$, $-OSO_2-C_1-C_4$-Alkyl oder $-OSO_2-N(C_1-C_4\text{-Alkyl})_2$ handeln. Bevorzugt ist U eine Gruppe der Formel -Cl, $-OSO_3H$, $-SSO_3H$, $-OCO-CH_3$, $-OCO-C_6H_5$ oder $-OPO_3H_2$, insbesondere -Cl oder $-OSO_3H$ und besonders bevorzugt $-OSO_3H$.

Y bedeutet bevorzugt Vinyl, β-Chlorethyl, β-Sulfatoethyl, β-Thiosulfatoethyl, β-Acetoxyethyl, β-Phenoxyethyl oder β-Phosphatoethyl und besonders bevorzugt β-Sulfatoethyl oder Vinyl.

X bedeutet bevorzugt Brom.

$R_4$ bedeutet bevorzugt um Wasserstoff.

$R_5$ bedeutet bevorzugt Wasserstoff, $C_1$-$C_4$-Alkyl.

$R_5$ bedeutet besonders bevorzugt Wasserstoff, Methyl oder Ethyl.

$R_6$ bedeutet bevorzugt Wasserstoff, Methyl oder Ethyl und besonders bevorzugt Wasserstoff.

Die Variable B steht bevorzugt für -NH- oder -O- und besonders bevorzugt für -O-.

Die Variable n bedeutet bevorzugt die Zahl 1, und t steht bevorzugt für die Zahl 0.

Bevorzugt als Reaktivreste der Formel (2a) bis (2g) sind solche, worin $R_4$, $R_5$ und $R_6$ je Wasserstoff, B den Rest -NH- oder -O-, alk und alk' unabhängig voneinander je Ethylen oder Propylen, arylen unsubstituiertes oder durch Methyl, Methoxy, Carboxy oder Sulfo substituiertes Phenylen oder unsubstituiertes oder durch Sulfo substituiertes Naphthylen, Y Vinyl oder β-Sulfatoethyl, $Y_1$ -CHBr-$CH_2$Br oder -CBr=$CH_2$ und t die Zahl 0 bedeuten.

V und V' stehen als Reaktivrest unabhängig voneinander je besonders bevorzugt für eine Gruppe der Formel

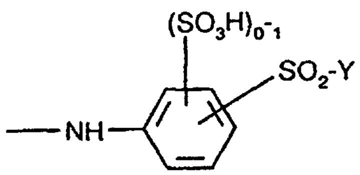

(3a),

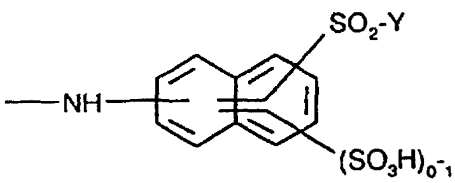

(3b),

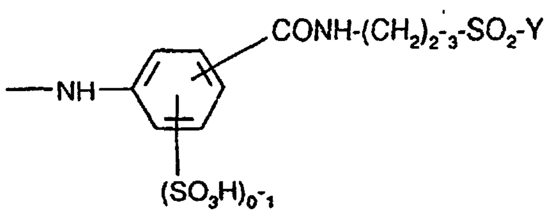

(3c)

oder

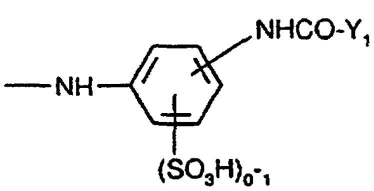

(3d)

,

worin für Y und $Y_1$ jeweils die zuvor genannten Bedeutungen und Bevorzugungen gelten.

Die Reste V und V' können verschieden oder vorzugsweise gleich sein.

Eine bevorzugte Ausführungsform der vorliegenden Erfindung betrifft Verbindungen der zuvor angegebenen Formel (1), worin R, $R_1$, $R_2$ und $R_3$ unabhängig voneinander je Wasserstoff, Methyl oder Ethyl bedeuten, Z und Z' unabhängig voneinander je für einen verzweigten $C_3$-$C_6$-Alkylenrest stehen, T und T' unabhängig voneinander je Chlor oder Fluor bedeuten, V und V' unabhängig voneinander je Amino, unsubstituiertes oder durch Hydroxy, Sulfo oder Sulfato substituiertes N-Mono- oder N,N-Di-$C_1$-$C_2$-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy, Sulfo oder Sulfato substituiertes N-$C_1$-$C_2$-Alkyl-N-phenylamino, Morpholino oder einen Reaktivrest der Formel

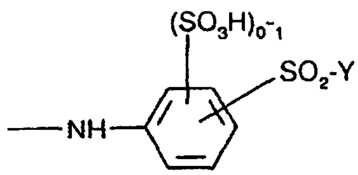

(3a),

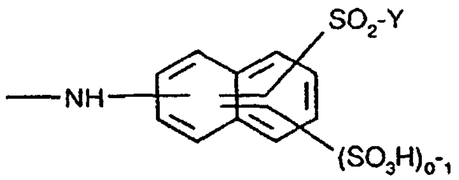

(3b),

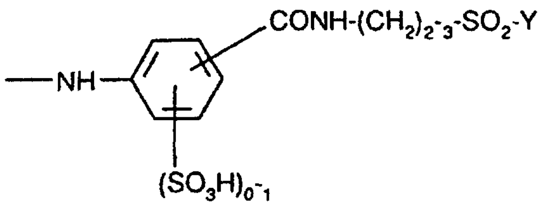

(3c)

oder

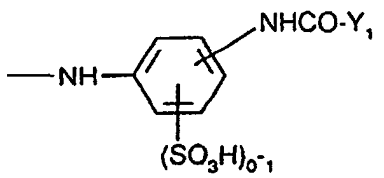

(3d)

,

worin Y β-Sulfatoethyl oder Vinyl und $Y_1$ die Gruppe $-CHBr-CH_2-Br$ oder $-CBr=CH_2$ sind, bedeuten, und n für die Zahl 1 steht.

Eine besonders bevorzugte Ausführungsform der vorliegenden Erfindung betrifft Verbindungen der Formel

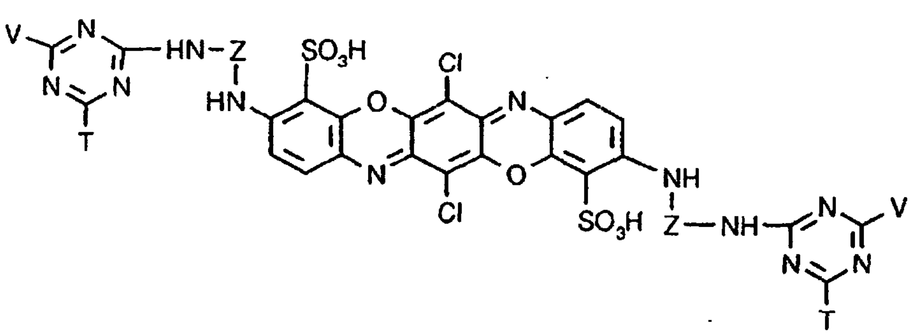

(1'),

worin Z ein verzweigter $C_3$-$C_6$-Alkylenrest ist, T für Chlor oder Fluor steht und V durch 1 bis 3 gleiche oder verschiedene

Substituenten aus der Gruppe Sulfo, Methyl und Methoxy substituiertes Phenylamino oder durch 1 oder 2 Sulfogruppen substituiertes 2-Naphthylamino bedeutet.

Die Verbindungen der Formel (1) können hergestellt werden, z.B. indem man eine Verbindung der Formel

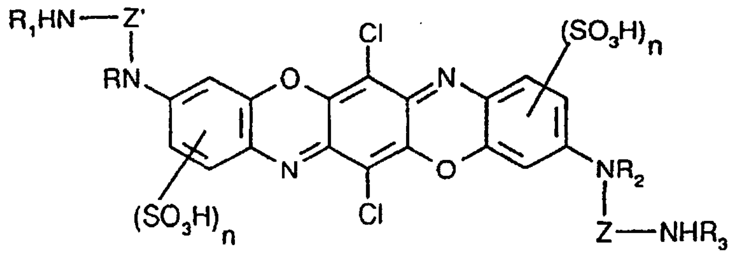

(4),

worin R, $R_1$, $R_2$, $R_3$, Z, Z' und n jeweils die zuvor angegebene Bedeutung haben, in beliebiger Reihenfolge mit je in etwa 1 Mol-Aequivalent einer Verbindung der Formel

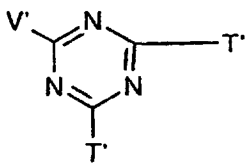

(5a)

und

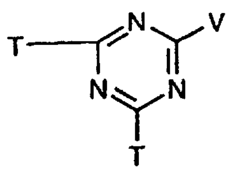

(5b)

worin T und T' unabhängig voneinander je Fluor, Chlor oder Brom sind und V und V' jeweils die zuvor angegebene Bedeutung haben, kondensiert und, falls zutreffend, vor oder nach dieser Kondensation jeweils einen der beiden Reste T und T' in einen anderen Rest T und/oder T' umwandelt.

Eine Variante des Verfahrens z.B. für den Fall, dass T und T' und V und V' jeweils identisch sind, besteht darin, dass man die Verbindung der Formel (4) zunächst mit in etwa 2 Moläquivalenten einer Verbindung der Formel

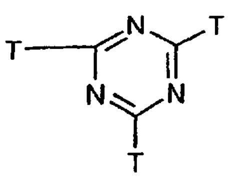

(5c)

,

worin T Fluor, Chlor oder Brom bedeutet, und anschliessend mit in etwa 2 Moläquivalenten einer Verbindung der Formel

$$V - H \qquad (6),$$

worin V die zuvor angegebene Bedeutung hat, kondensiert.

Die Kondensation der Verbindung der Formel (4) mit den Triazinylverbindungen der Formeln (5a), (5b) oder (5c) erfolgt vorteilhaft in wässriger Lösung oder Suspension bei niedrigen Temperaturen, z.B. bei 0 bis 5°C und bei einem schwach sauren, neutralen oder vorzugsweise schwach alkalischen pH-Wert, z.B. bei einem pH-Wert von 7,5 bis 10, wobei der bei der Kondensation freiwerdende Halogenwasserstoff laufend durch Zugabe z.B. von wässrigen

Alkalihydroxiden, -carbonaten oder -bicarbonaten neutralisiert wird.

Die Verbindungen der Formel (4) sind neu und stellen einen weiteren Gegenstand der Erfindung dar. Sie können in an sich bekannter Weise, z.B. durch Kondensation von 2,3,5,6-Tetrachloro-1 ,4-benzochinon mit den entsprechenden aromatischen Aminkomponenten, erhalten werden. Man kann z.B. so vorgehen, dass man ca. 1 Moläquivalent 2,3,5,6-Tetrachloro-1,4-benzochinon mit je etwa 1 Moläquivalent der Amine der Formel

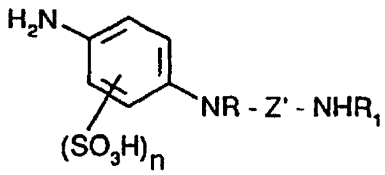

(7a)

und

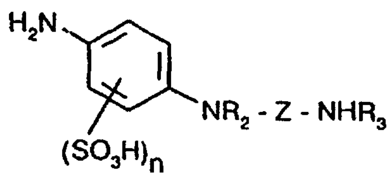

(7b),

worin R, $R_1$, $R_2$, $R_3$, Z, Z' und n jeweils die zuvor angegebene Bedeutung haben, kondensiert und das resultierende Dianilid in Gegenwart eines Oxidationsmittels, z.B. Oleum, zum Dioxazin cyclisiert.

Die Verbindungen der Formeln (5a) und (5b) sind bekannt oder können in an sich bekannter Weise, z.B. durch Umsetzung eines Trihalogen-s-triazins mit einer Verbindung der zuvor angegebenen Formel (6), erhalten werden. Die Verbindungen der Formel (5c), (6), (7a) und (7b) sind an sich bekannt oder können in an sich bekannter Weise hergestellt werden.

Ein weiterer Gegenstand der Erfindung betrifft Mischungen von verschiedenen Verbindungen der Formel (1). Bevorzugt sind hierbei Mischungen enthaltend je eine Verbindung der Formel

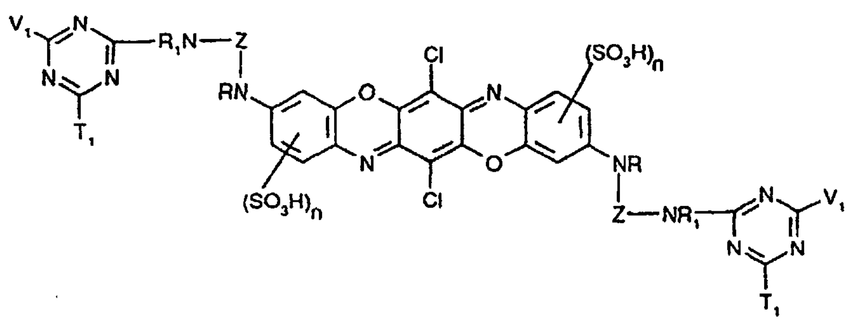

(1a),

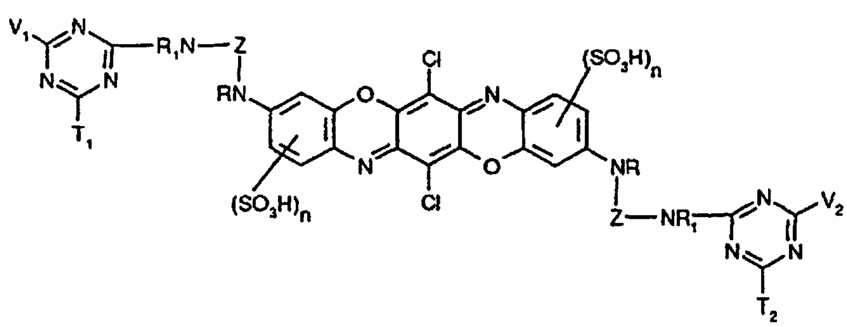

(1b)

und

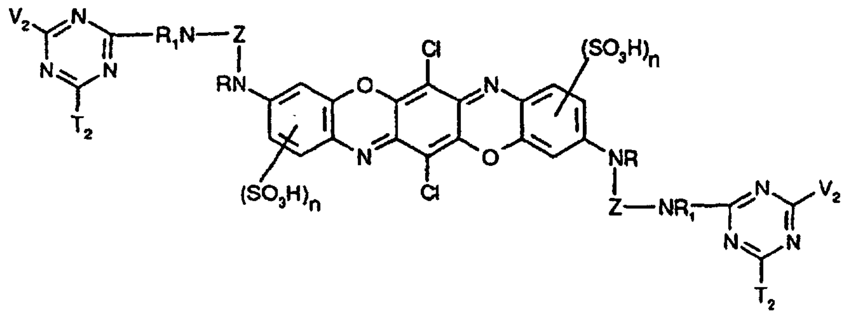

(1c),

worin R, $R_1$, Z und n jeweils die zuvor angegebene Bedeutung haben, $V_1$ und $V_2$ unabhängig voneinander jeweils eine der zuvor für V angegebenen Bedeutungen haben, und $T_1$ und $T_2$ unabhängig voneinander jeweils eine der zuvor für T angegebenen Bedeutungen haben, und wobei $V_1$ und $V_2$ und/oder $T_1$ und $T_2$ verschieden voneinander sind.

Die Farbstoffgemische enthaltend mehrere Verbindungen der Formel (1) können z.B. durch einfaches Zusammenmischen der Farbstoffe oder aber, z.B. im Fall von Gemischen je einer Verbindung der Formeln (1a), (1b) und (1c), direkt bei der Herstellung z.B. durch Reaktion einer Verbindung der zuvor angegebenen Formel (4) mit einem Gemisch von zwei unterschiedlichen Verbindungen der Formeln (5a) und (5b) erhalten werden. Geeignete erfindungsgemässe Farbstoffgemische enthalten z.B. 5 bis 60 Gew.-% Verbindung der oben angegebenen Formel (1a), 20 bis 75 Gew.-% Verbindung der oben angegebenen Formel (1b) und 60 bis 5 Gew.-% Verbindung der oben angegebenen Formel (1c), wobei die Summe der drei Verbindungen 100 Gew.-% beträgt. Bevorzugt sind Farbstoffmischungen enthaltend je eine Verbindung der zuvor angegebenen Formeln (1a), (1b) und (1c), worin Z verzweigtes $C_3$-$C_6$-Alkylen und n die Zahl 1 bedeuten, $T_1$ und $T_2$ gleich sind und je Fluor oder Chlor bedeuten, und $V_1$ und $V_2$ verschieden voneinander sind und je 2-, 3-oder 4-Sulfophenylamino, 2,4- oder 2,5-Disulfophenylamino oder einen faserreaktiven Rest 4-Vinylsulfonylphenylamino oder 4-β-Sulfatoethylsulfonylphenylamino bedeuten.

Die Verbindungen der Formel (1) eignen sich als Reaktivfarbstoffe zum Färben oder Bedrucken der verschiedensten Materialien, insbesondere von hydroxylgruppenhaltigen oder stickstoffhaltigen Fasermaterialien. Beispiele für stickstoffhaltige Fasermaterialien sind Seide, Wolle, synthetische Polyamidfasermaterialien, Polyurethane sowie diese enthaltende Mischgewebe. Beispiele für hydroxylgruppenhaltige Fasermaterialien sind natürliche Fasermaterialien, z. B. Leinen, Hanf, Jute oder insbesondere Baumwolle, Zellstoff, regenerierte Cellulose sowie diese enthaltende Mischgewebe. Die erfindungsgemässen Farbstoffe sind insbesondere für das Färben oder Bedrucken von Baumwolle sowie von baumwollehaltigen Mischgeweben, z.B. Baumwolle/Polyester- oder Baumwolle/Polyamid-Mischgeweben, geeignet.

Die erfindungsgemässen Verbindungen der Formel (1) sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe lassen sich auf verschiedene Weise auf der Faser fixieren, insbesondere in Form von wässrigen Farbstofflösungen oder -druckpasten. Sie eignen sich sowohl für das Ausziehverfahren als auch für das Färben nach einem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern wie z.B. Wolle, Seide oder Seide und Wolle enthaltende Mischgewebe. Flüssige Formulierungen der Verbindungen der Formel (1) und diese enthaltende Druckpasten zeichnen sich durch eine gute Lagerstabilität aus.

Die mit den erfindungsgemässen Verbindungen der Formel (1) hergestellten Färbungen und Drucke auf Cellulosematerialien besitzen eine hohe Farbstärke und eine hohe Faser-Farbstoff-Bindungsstabilität, sowohl im sauren als auch im alkalischen Bereich, weiterhin eine gute Lichtechtheit und sehr gute Nassechtheiten, z.B. Wasch-, Wasser-, Seewasser-, Ueberfärbe- und Schweissechtheit, sowie eine gute Plissierechtheit, Bügelechtheit, Reibechtheit und Chlorechtheit.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis Kilogramm zu Liter.

Herstellung der Verbindungen der Formel (4)

Beispiel 1: 27 Teile 2-Chlor-5-nitrobenzolsulfonsäure werden mit 166 Teilen 1,2-Diaminopropan 8 Stunden bei Raumtemperatur gerührt. Danach wird das überschüssige 1,2-Diaminopropan unter vermindertem Druck abdestilliert und der Rückstand in Wasser aufgenommen, mit Salzsäure neutralisiert, abfiltriert und im Vakuum getrocknet. Man erhält 28 Teile N-(2-Aminopropyl)-amino-4-nitroanilin-2-sulfonsäure als gelbes Pulver, welches anschliessend in 300 Teilen Wasser suspendiert mit Wasserstoff und 3 Teilen 5 % Pd/C bei 40°C zur Diaminoverbindung reduziert wird. Nach einer Klärfiltration gibt man zum Reaktionsgemisch portionsweise 12,3 Teile 2,3,5,6-Tetrachlor-1,4-Benzochinon bei einer Temperatur von 40 bis 60°C zu und hält den pH-Wert durch Zugabe von Natriumhydroxidlösung während ca. 12 Stunden konstant bei 6,0. Man lässt danach abkühlen, filtriert das entstandene Dianilid ab, wäscht es mit Wasser und trocknet es im Vakuum. Das fein gemahlene Dianilid wird bei einer Temperatur von 0 bis 5°C portionsweise in 620 Teile 5%iges Oleum eingetragen, mit 51 Teilen Kaliumpersulfat versetzt und ca. 3 Stunden gerührt. Danach wird das Reaktionsgemisch auf Eis ausgetragen und der pH-Wert mit Natriumhydroxidlösung auf ca. 3 eingestellt. Man filtriert den blauen Niederschlag ab, wäscht mit warmem Wasser nach und trocknet im Vakuum bei erhöhter Temperatur. Es ergeben sich 49 Teile der Verbindung der Formel

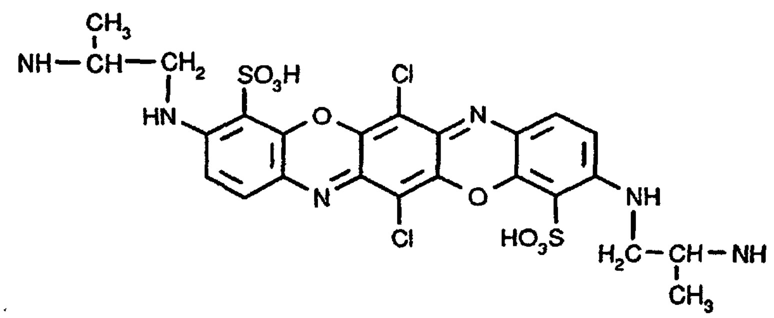

(8)

Beispiel 2: 26 Teile 2-Chlor-5-nitrobenzolsulfonsäure werden mit 220 Teilen 2,2-Dimethyl-1,3-diaminopropan 8 Stunden bei Raumtemperatur gerührt. Danach wird das überschüssige 2,2-Dimethyl-1,3-diaminopropan unter vermindertem Druck abdestilliert und der Rückstand in Wasser aufgenommen, mit Salzsäure neutralisiert, abfiltriert und im Vakuum getrocknet. Man erhält 30 Teile N-(3-Amino-2,2-dimethylpropyl)-amino-4-nitroanilin-2-sulfonsäure als gelbes Pulver, welches anschliessend in 300 Teilen Wasser suspendiert mit Wasserstoff und 3 Teilen 5 % Pd/C bei 40°C zur Diaminoverbindung reduziert wird. Nach einer Klärfiltration gibt man zum Reaktionsgemisch portionsweise 12,3 Teile 2,3,5,6-Tetrachlor-1,4-Benzochinon bei einer Temperatur von 40 bis 60°C zu und hält den pH-Wert durch Zugabe von Natriumhydroxidlösung während ca. 12 Stunden konstant bei 6,0. Man lässt danach abkühlen, filtriert das entstandene Dianilid ab, wäscht es mit Wasser und trocknet es im Vakuum. Das fein gemahlene Dianilid wird bei einer Temperatur von 0 bis 5°C portionsweise in 350 Teile 5%iges Oleum eingetragen, mit 27 Teilen Kaliumpersulfat versetzt und ca. 3 Stunden gerührt. Danach wird das Reaktionsgemisch auf Eis ausgetragen und der pH-Wert mit Natriumhydroxidlösung auf ca. 3 eingestellt. Man filtriert den blauen Niederschlag ab, wäscht mit warmem Wasser nach und trocknet im Vakuum bei erhöhter Temperatut. Es ergeben sich 27 Teile der Verbindung der Formel

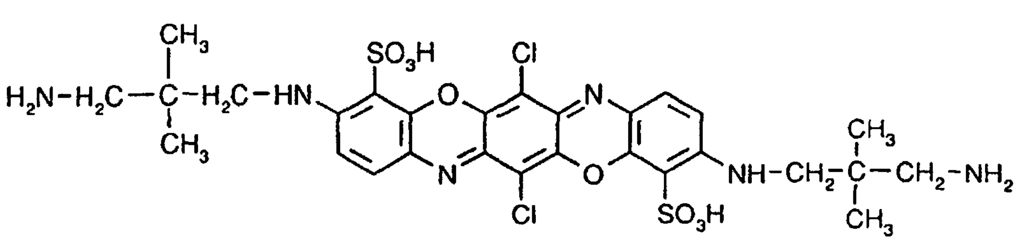

(9)

Herstellung der Verbindungen der Formel (1)

Beispiel 3: 19 Teile Cyanurchlorid werden mit 50 Teilen Wasser unter Zusatz eines Netzmittels und von 5 Teilen Dinatriumhydrogenphosphat bei einer Temperatur von 0°C intensiv gerührt. Man tropft zuder Suspension eine

neutrale Lösung von 17 Teilen 2-Aminobenzolsulfonsäure in 170 Teilen Wasser zu und hält während der Reaktion den pH-Wert durch Zugabe von Natriumhydroxidlösung konstant bei 5,2. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

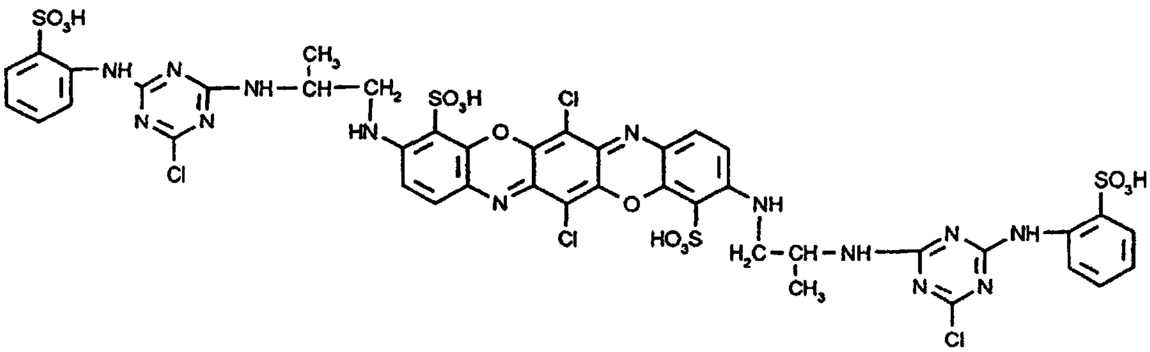

als violettes Pulver, welches Cellulose in brillantblauen Tönen färbt.

Beispiel 4: 19 Teile Cyanurchlorid werden mit 50 Teilen Wasser unter Zusatz eines Netzmittels und von 5 Teilen Dinatriumhydrogenphosphat bei einer Temperatur von 0°C intensiv gerührt. Man tropft zuder Suspension eine neutrale Lösung von 28 Teilen 2-Amino-5-methoxybenzol-1,4-disulfonsäure in 250 Teilen Wasser zu und hält während der Reaktion den pH-Wert durch Zugabe von Natriumhydroxidlösung konstant bei 5,5. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

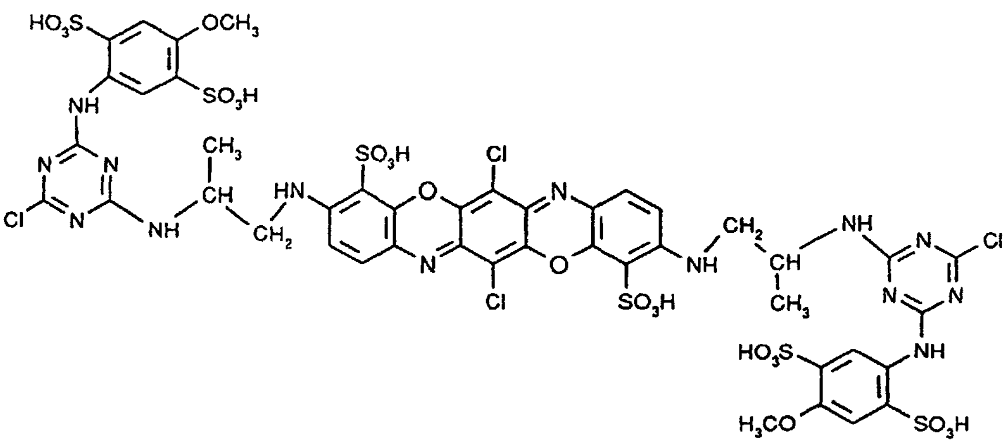

als violettes Pulver, welches Cellulose in brillantblauen Tönen färbt.

Beispiel 5: 19 Teile Cyanurchlorid werden mit 50 Teilen Wasser unter Zusatz eines Netzmittels und von 5 Teilen Dinatriumhydrogenphosphat bei einer Temperatur von 0°C intensiv gerührt. Man tropft zuder Suspension eine neutrale Lösung von 30 Teilen 2-Aminonaphthalin-1,5-disulfonsäure in 300 Teilen Wasser zu und hält während der Reaktion den pH-Wert durch Zugabe von Natriumhydroxidlösung konstant bei 5,5. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

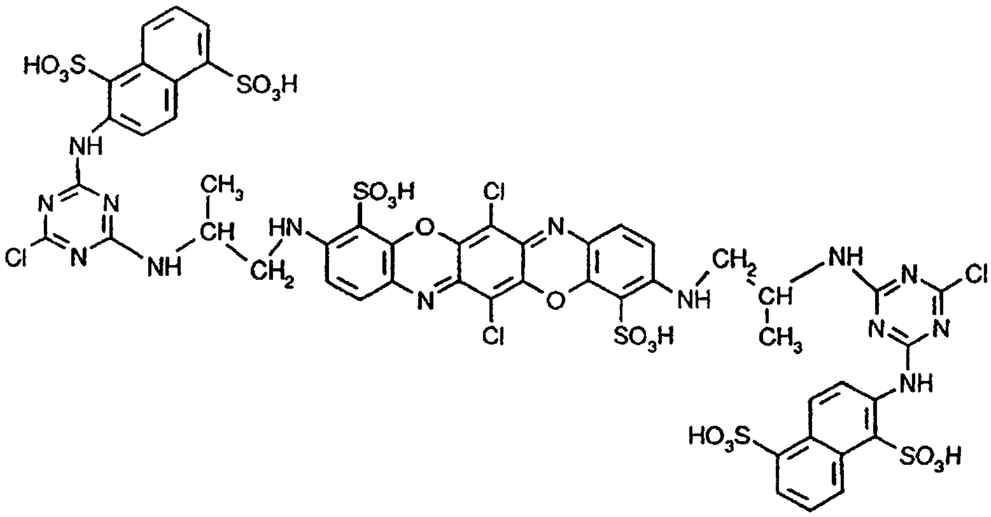

als violettes Pulver, welches Cellulose in brillantblauen Tönen färbt.

Beispiel 6: 19 Teile Cyanurchlorid werden mit 50 Teilen Wasser unter Zusatz eines Netzmittels und von 5 Teilen Dinatriumhydrogenphosphat bei einer Temperatur von 0°C intensiv gerührt. Man tropft zuder Suspension eine neutrale Lösung von 25 Teilen 2-Aminobenzol-1,4-disulfonsäure in 250 Teilen Wasser zu und hält während der Reaktion den pH-Wert durch Zugabe von Natriumhydroxidlösung konstant bei 5,5. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

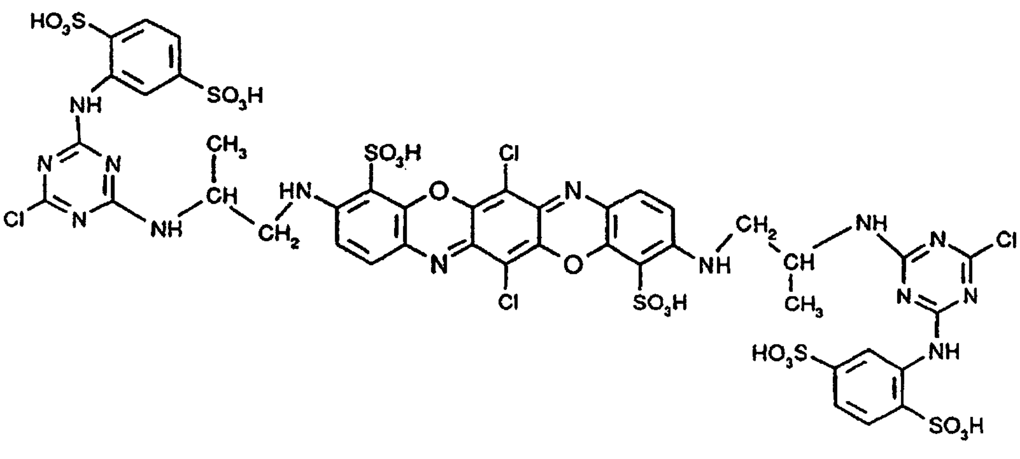

als violettes Pulver, welches Cellulose in brillantblauen Tönen färbt.

Beispiel 7: Zu einer Lösung von 17 Teilen 2-Aminobenzolsulfonsäure und 5 Teilen Dinatriumhydrogenphosphat in 170 Teilen Wasser werden 14 Teile Cyanurfluorid bei einer Temperatur von 0 bis 2°C zugetropft und der pH-Wert während der Reaktion durch Zugabe von Natriumhydroxidlösung konstant bei 5,2 gehalten. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

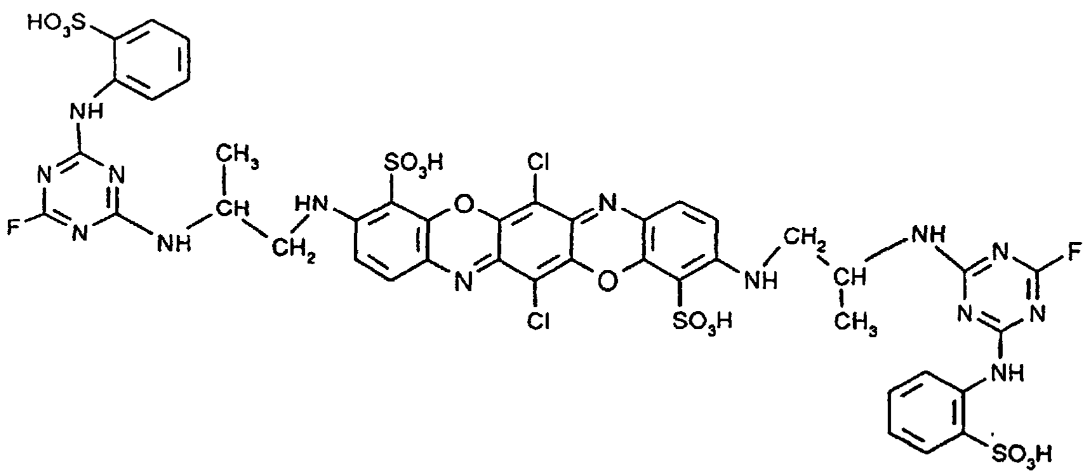

als violettes Pulver, welches Cellulose in brillantblauen Tönen färbt.

Beispiel 8: Zu einer Lösung von 25 Teilen 2-Aminobenzol-1,4-disulfonsäure und 5 Teilen Dinatriumhydrogenphosphat in 250 Teilen Wasser werden 14 Teile Cyanurfluorid bei einer Temperatur von 0 bis 2°C zugetropft und der pH-Wert während der Reaktion durch Zugabe von Natriumhydroxidlösung konstant bei 5,2 gehalten. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

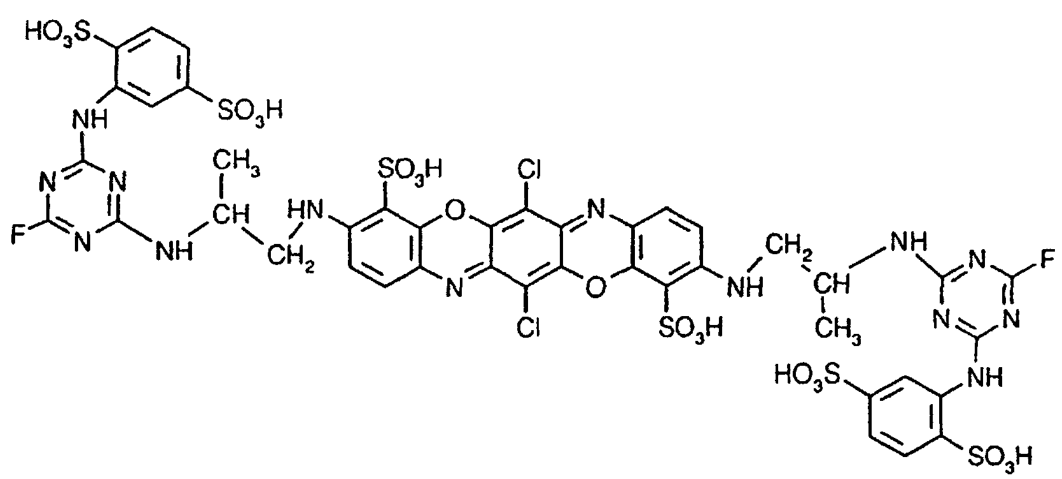

als violettes Pulver, welches Cellulose in brillantblauen Tönen färbt.

Beispiel 9: Zu einer Lösung von 17 Teilen 2-Aminobenzolsulfonsäure und 5 Teilen Dinatriumhydrogenphosphat in 170 Teilen Wasser werden 14 Teile Cyanurfluorid bei einer Temperatur von 0 bis 2°C zugetropft und der pH-Wert während der Reaktion durch Zugabe von Natriumhydroxidlösung konstant bei 5,2 gehalten. Nach beendeter Reaktion wird zu dem Reaktionsgemisch eine Suspension von 36 Teilen der Verbindung der Formel (9) gemäss Beispiel 2 und 3,3 Teilen Lithiumhydroxid-Monohydrat in 650 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

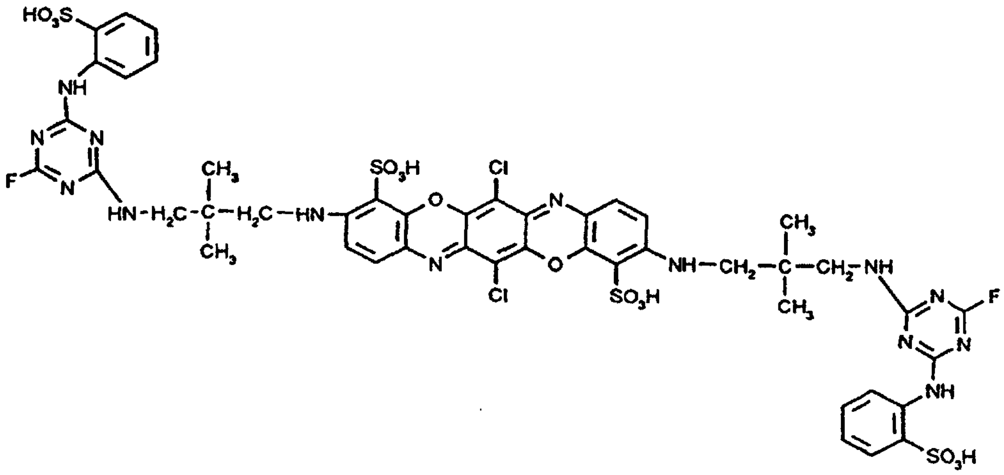

als violettes Pulver, welches Cellulose in brillantblauen Tönen färbt.

Beispiel 10: 19 Teile Cyanurchlorid werden mit 50 Teilen Wasser unter Zusatz eines Netzmittels und von 5 Teilen Dinatriumhydrogenphosphat bei einer Temperatur von 0°C intensiv gerührt. Man tropft zuder Suspension eine neutrale Lösung von 28 Teilen 2-Amino-5-methoxybenzol-1,4-disulfonsäure in 250 Teilen Wasser zu und hält während der Reaktion den pH-Wert durch Zugabe von Natriumhydroxidlösung konstant bei 5,5. Nach beendeter Reaktion wird zu dem Reaktionsgemisch eine Suspension von 36 Teilen der Verbindung der Formel (9) gemäss Beispiel 2 und 3,3 Teilen Lithiumhydroxid-Monohydrat in 650 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

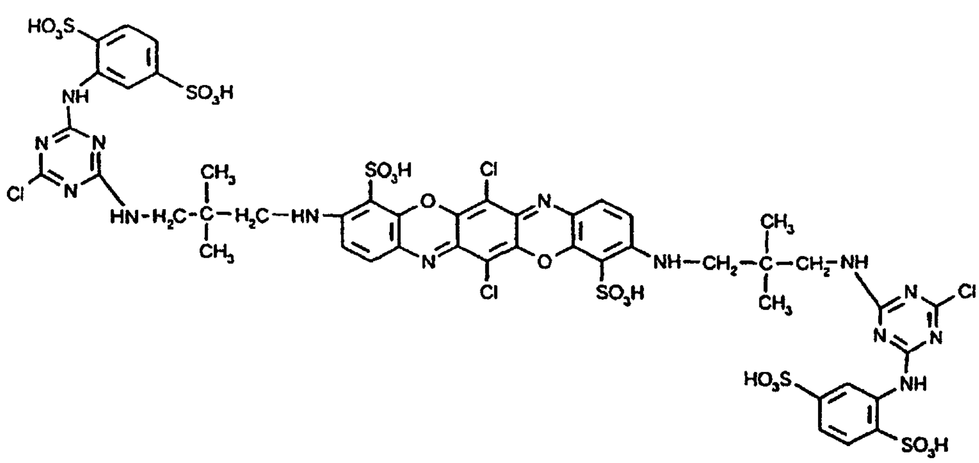

als violettes Pulver, welches Cellulose in brillantblauen Tönen färbt.

Beispiel 11: Zu einer Lösung von 8,5 Teilen 2-Aminobenzolsulfonsäure, 12,5 Teilen 2-Aminobenzol-1,4-disulfonsäure und 5 Teilen Dinatriumhydrogenphosphat in 200 Teilen Wasser werden 14 Teile Cyanurfluorid bei einer Temperatur von 0 bis 2°C zugetropft und der pH-Wert während der Reaktion durch Zugabe von Natriumhydroxidlösung konstant bei 5,5 gehalten. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 650 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält ein Gemisch der Verbindungen der Formel

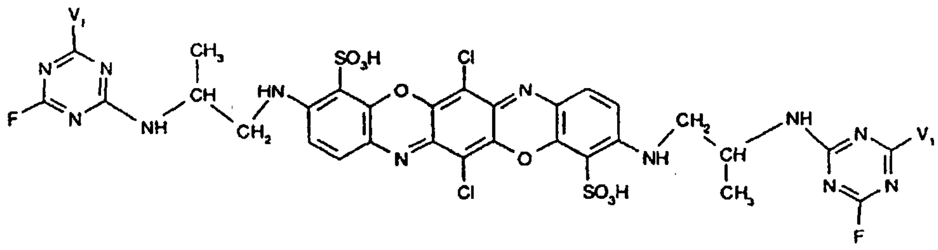

(10a),

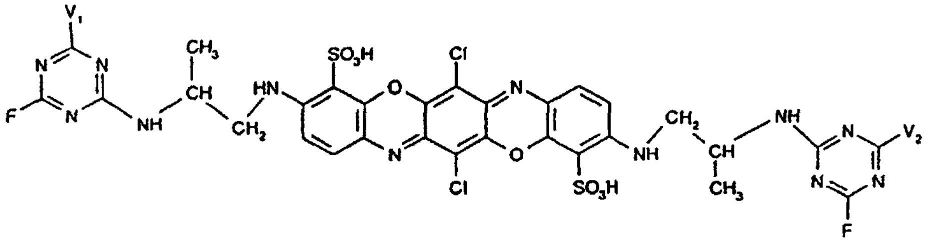

(10b)

und

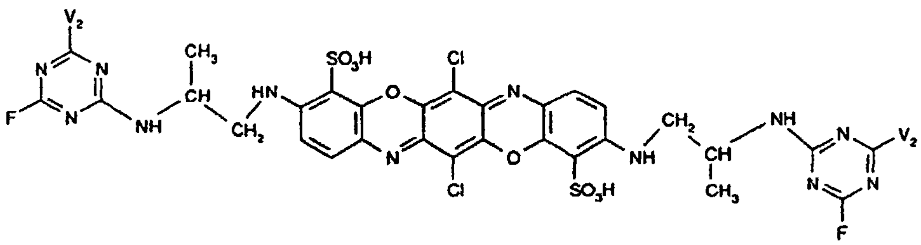

(10c),

worin $V_1$ 2-Sulfophenylamino und $V_2$ 2,5-Disulfophenylamino bedeuten, und welches Cellulose in brillantblauen Tönen färbt. Beispiel 12: Zu einer Lösung von 7,6 Teilen 2-Aminobenzol-1,4-disulfonsäure, 19,6 Teilen 4-β-Sulfatoethylsulfonylanilin und 5 Teilen Dinatriumhydrogenphosphat in 200 Teilen Wasser werden 14 Teile Cyanurfluorid bei einer Temperatur von 0 bis 2°C zugetropft und der pH-Wert während der Reaktion durch Zugabe von Natriumhydroxidlösung konstant bei 5,5 gehalten. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält ein Farbstoffgemisch enthaltend 49 Gew.-% Verbindung der im Beispiel 11 angegebenen Formel (10a), 42 Gew.-% Verbindung der im Beispiel 11 angegebenen Formel (10b) und 9 Gew.-% Verbindung der im Beispiel 11 angegebenen Formel (10c), worin $V_1$ 2,5-Disulfophenylamino und $V_2$ 4-β-Sulfatoethylsulfonylphenylamino sind.

Beispiel 13: Verfährt man wie im Beispiel 12 angegeben und setzt anstelle von 7,6 Teilen 2-Aminobenzol-1,4-disulfonsäure und 19,6 Teilen 4-β-Sulfatoethylsulfonylanilin 10,1 Teile 2-Aminobenzol-1,4-disulfonsäure und 16,9 Teile 4-β-Sulfatoethylsulfonylanilin ein, erhält man ein Farbstoffgemisch enthaltend 36 Gew.-% Verbindung der im Beispiel 11 angegebenen Formel (10a), 48 Gew.-% Verbindung der im Beispiel 11 angegebenen Formel (10b) und 16 Gew.-% Verbindung der im Beispiel 11 angegebenen Formel (10c), worin $V_1$ 2,5-Disulfophenylamino und $V_2$ 4-β-Sulfatoethylsulfonylphenylamino sind.

Beispiel 14:Verfährt man wie im Beispiel 12 angegeben und setzt anstelle von 7,6 Teilen 2-Aminobenzol-1,4-disulfonsäure und 19,6 Teilen 4-β-Sulfatoethylsulfonylanilin 12,7 Teile 2-Aminobenzol-1,4-disulfonsäure und 14,1 Teile 4-β-Sulfatoethylsulfonylanilin ein, erhält man ein Farbstoffgemisch enthaltend 25 Gew.-% Verbindung der im Beispiel 11 angegebenen Formel (10a), 50 Gew.-% Verbindung der im Beispiel 11 angegebenen Formel (10b) und 25 Gew.-% Verbindung der im Beispiel 11 angegebenen Formel (10c), worin $V_1$ 2,5-Disulfophenylamino und $V_2$ 4-β-Sulfatoethylsulfonylphenylamino sind.

Beispiel 15: Verfährt man wie im Beispiel 12 angegeben und setzt anstelle von 7,6 Teilen 2-Aminobenzol-1,4-disulfonsäure und 19,6 Teilen 4-β-Sulfatoethylsulfonylanilin 15,2 Teile 2-Aminobenzol-1,4-disulfonsäure und 11,3

Teile 4-β-Sulfatoethylsulfonylanilin ein, erhält man ein Farbstoffgemisch enthaltend 16 Gew.-% Verbindung der im Beispiel 11 angegebenen Formel (10a), 48 Gew.-% Verbindung der im Beispiel 11 angegebenen Formel (10b) und 36 Gew.-% Verbindung der im Beispiel 11 angegebenen Formel (10c), worin $V_1$ 2,5-Disulfophenylamino und $V_2$ 4-β-Sulfatoethylsulfonylphenylamino sind.

Beispiel 16: Verfährt man wie im Beispiel 12 angegeben und setzt anstelle von 7,6 Teilen 2-Aminobenzol-1,4-disulfonsäure und 19,6 Teilen 4-β-Sulfatoethylsulfonylanilin 17,7 Teile 2-Aminobenzol-1,4-disulfonsäure und 8,4 Teile 4-β-Sulfatoethylsulfonylanilin ein, erhält man ein Farbstoffgemisch enthaltend 9 Gew.-% Verbindung der im Beispiel 11 angegebenen Formel (10a), 42 Gew.-% Verbindung der im Beispiel 11 angegebenen Formel (10b) und 49 Gew.-% Verbindung der im Beispiel 11 angegebenen Formel (10c), worin $V_1$ 2,5-Disulfophenylamino und $V_2$ 4-ß-Sulfatoethylsulfonylphenylamino sind.

Beispiel 17:8,5 Teile 3-Aminobenzolsulfonsäure und 8,5 Teile 4-Aminobenzolsulfonsäure werden mit 8,4 Teilen Natriumfluorid in 200 Teilen Wasser neutral gelöst. Man versetzt die Lösung mit 160 Teilen Eis und 19 Teilen konz. HCl und tropft bei einer Temperatur von 0 bis 2°C 13,5 Teile Cyanurfluorid rasch zu. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält ein Farbstoffgemisch enthaltend je eine Verbindung der im Beispiel 11 angegebenen Formeln (10a), (10b) und (10c), worin $V_1$ 3-Sulfophenylamino und $V_2$ 4-Sulfophenylamino sind, im Gewichtsverhältnis von 1:2:1.

Beispiel 18: 17 Teile 4-Aminobenzolsulfonsäure werden mit 8,4 Teilen Natriumfluorid in 200 Teilen Wasser neutral gelöst. Man versetzt die Lösung mit 160 Teilen Eis und 19 Teilen konz. HCl und tropft bei einer Temperatur von 0 bis 2°C 13,5 Teile Cyanurfluorid rasch zu. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält die Verbindung der Formel

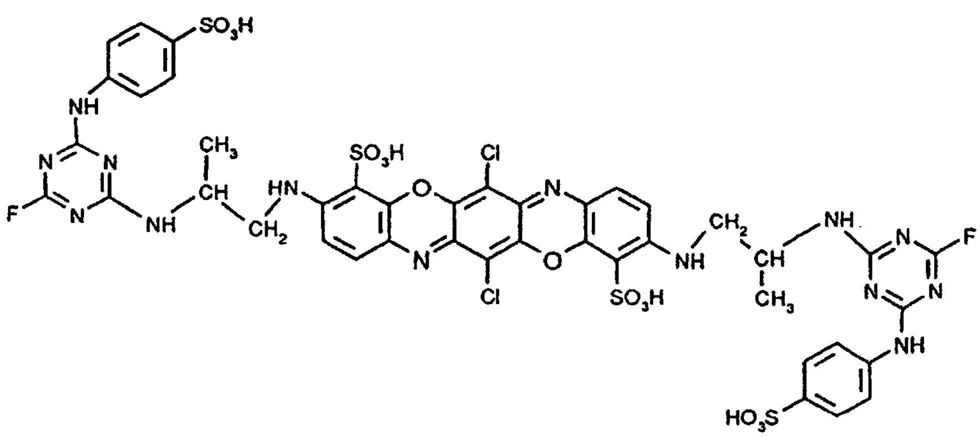

als Pulver, welches Cellulosefasern in brillantblauen Tönen mit guten Allgemeinechtheiten färbt.

Beispiel 19: Verfährt man wie im Beispiel 18 angegeben und verwendet anstelle der 4-Aminobenzolsulfonsäure eine äquivalente Menge 3-Aminobenzolsulfonsäure, wird die Verbindung der Formel

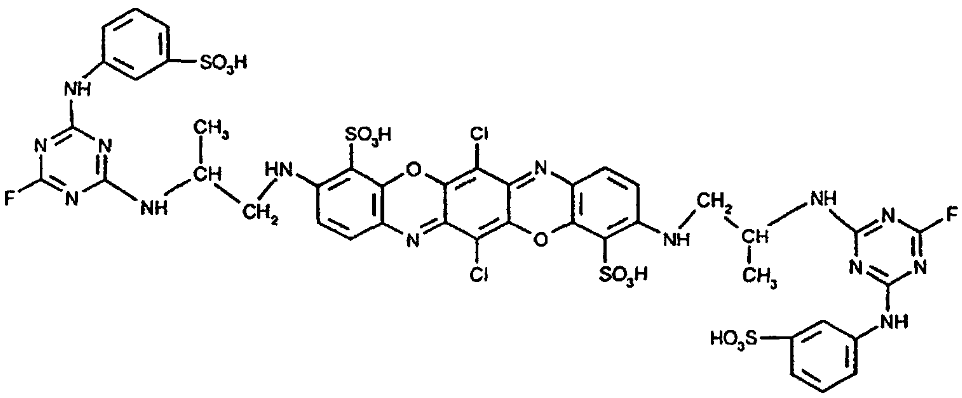

erhalten, die Cellulosefasern ebenfalls in einer brillantblauen Nuance mit guten Allgemeinechtheiten färbt.

Beispiel 20: 19 Teile Cyanurchlorid und 5 Teile Dinatriumhydrogenphosphat werden bei 0°C in 50 Teilen Wasser intensiv gerührt. Zu dieser Suspension wird eine neutrale Lösung von 12,5 Teilen 2-Aminobenzol-1,4-disulfonsäure und 8,5 Teilen 2-Aminobenzolsulfonsäure getropft und der pH-Wert während der Reaktion mit Natriumhydroxidlösung konstant bei 5,5 gehalten. Nach beendeter Reaktion wird zu dem Reaktionsgemisch eine Suspension von 33 Teilen der Verbindung der Formel (8) gemäss Beispiel 1 und 3,3 Teilen Lithiumhydroxid-Monohydrat in 600 Teilen Wasser gegeben und der pH-Wert während der nun folgenden Reaktion durch Zugabe von Natriumhydroxidlösung konstant bei 9,5 gehalten. Nachdem die Umsetzung komplett ist, wird das Reaktionsgemisch mit Salzsäure neutralisiert, dialytisch weitgehend entsalzt und eingedampft. Man erhält ein Farbstoffgemisch enthaltend die Verbindungen der

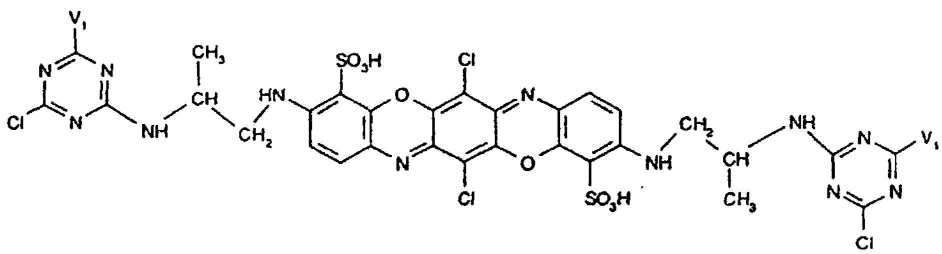

(11a),

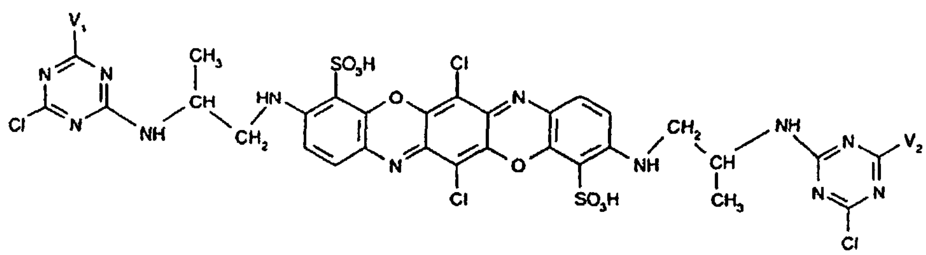

(11b)

und

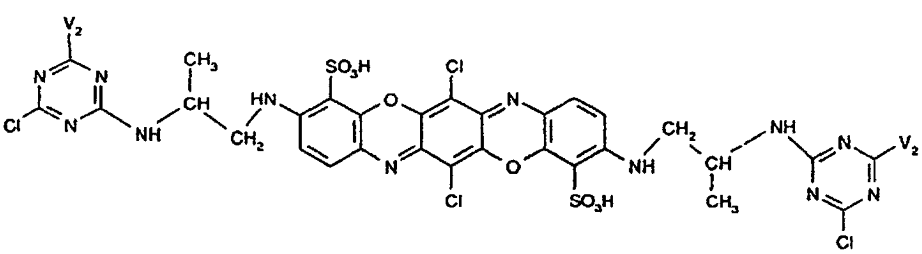

(11c),

worin $V_1$ 2-Sulfophenylamino und $V_2$ 2,5-Disulfophenylamino bedeuten, und welches Cellulosefasern in einer brillantblauen Nuance mit guten Allgemeinechtheiten färbt.

Färbevorschrift I: 2 Teile des gemäss Beispiel 3 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100Teilen Baumwollgewebe ein. Nach 45 Minuten werden 100 Teile einer Lösung, die pro Liter 16 9 Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Beispiel 3 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Beispiel 3 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10Minuten werden 200Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Beispiel 3 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Beispiel 3 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38 be) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Beispiel 3 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Färbevorschrift VII: 0,1 Teile Farbstoff gemäss Beispiel 3 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante blaue Färbung erhalten, die sehr gute Licht- und Nassechtheiten aufweist.

Druckvorschrift I: 3 Teile des gemäss Beispiel 3 erhaltenen Reaktivfarbstoffes werden unter schnellem Rühren in 100 Teile einer Stammverdickung, enthaltend 50 Teile 5%ige Natriumalginat verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 3 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel

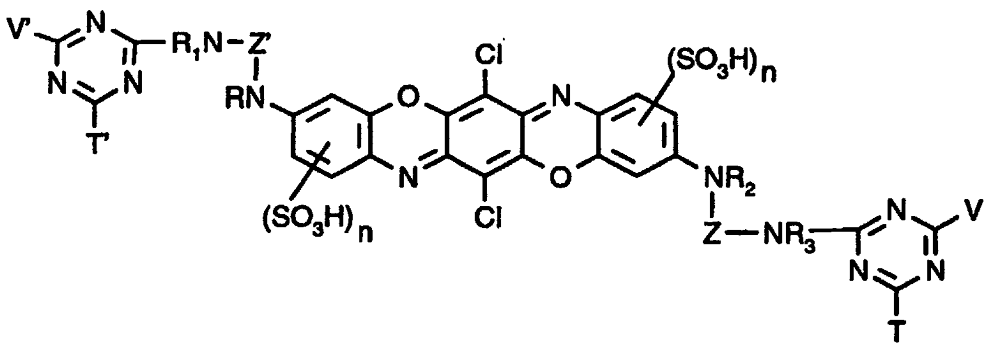

(1),

worin
R, $R_1$, $R_2$ und $R_3$ unabhängig voneinander je Wasserstoff oder gegebenenfalls durch Hydroxy, Sulfo, Sutfato, Carboxy, Cyano, Halogen, $C_1$-$C_4$-Alkoxycarbonyl oder Carbamoyl substituiertes $C_1$-$C_6$-Alkyl bedeuten,
Z und Z' unabhängig voneinander je für verzweigtes $C_3$-$C_6$-Alkylen stehen,
T und T' unabhängig voneinander je für Chlor, Fluor, Brom, 3-Carboxypyridin-1-yl oder 3-Carbamoylpyridin-1-yl stehen,
V und V' unabhängig voneinander je für Amino; unsubstituiertes oder durch Sulfo, Sulfato, Hydroxy, Carboxy oder Phenyl substituiertes N-$C_1$-$C_4$-Alkylamino oder N,N-Di-$C_1$-$C_4$-Alkylamino; Cyclohexylamino; unsubstituiertes oder durch $C_1$-$C_4$-Alkyl, $C_1$-$C_4$-Alkoxy, Amino, $C_2$-$C_4$-Alkanoylamino, Carboxy, Sulfo oder Halogen substituiertes Phenylamino oder Naphthylamino; unsubstituiertes oder im Alkylteil durch Sulfo, Sulfato, Hydroxy, Carboxy oder Phenyl substituiertes und/oder im Phenylteil durch $C_1$-$C_4$-Alkyl, $C_1$-$C_4$-Alkoxy, Amino, $C_2$-$C_4$-Alkanoylamino, Carboxy, Sulfo oder Halogen substituiertes N-$C_1$-$C_4$-Alkyl-N-phenylamino; Morpholino; oder für einen Reaktivrest der Formel

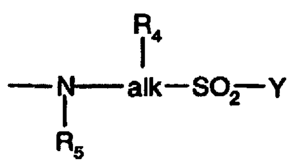

(2a)

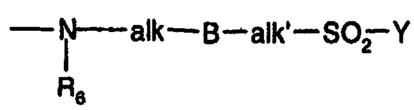

(2b)

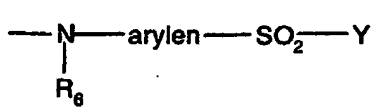

(2c)

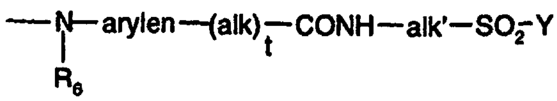

(2d)

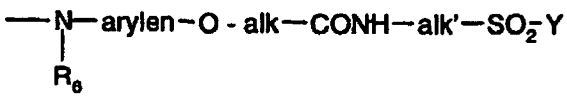

(2e)

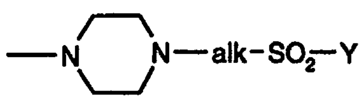

(2f)

oder

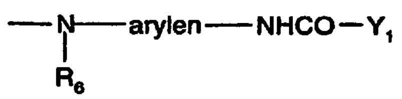

(2g)

stehen,
$R_4$ Wasserstoff, Hydroxy, Sulfo, Sulfato, Carboxy, Cyano, Halogen, $C_1$-$C_4$-Alkoxycarbonyl, Carbamoyl oder eine Gruppe -$SO_2$-Y ist,
$R_5$ Wasserstoff oder gegebenenfalls durch Hydroxy, Sulfo, Sulfato, Carboxy oder Cyano substituiertes $C_1$-$C_4$-Alkyl ist,
$R_6$ für Wasserstoff oder $C_1$-$C_4$-Alkyl steht,
alk und alk' unabhängig voneinander je $C_1$-$C_6$-Alkylen sind,
arylen einen unsubstituierten oder durch Sulfo, Carboxy, Hydroxy, $C_1$-$C_4$-Alkyl, $C_1$-$C_4$-Alkoxy oder Halogen substituierten Phenylen- oder Naphthylenrest bedeutet,
Y Vinyl oder einen Rest -$CH_2$-$CH_2$-U bedeutet und U eine Abgangsgruppe ist,
$Y_1$ für eine Gruppe -CHX-$CH_2$X oder -CX=$CH_2$ steht,
X Chlor oder Brom bedeutet,
B ein Rest -O- oder -$NR_6$-, worin $R_6$ die oben angegebene Bedeutung hat, ist, und
n und t unabhängig voneinander je für die Zahl 0 oder 1 stehen.

2. Verbindungen gemäss Anspruch 1, **dadurch gekennzeichnet, dass** R und $R_2$ identisch sind und jeweils Wasserstoff oder $C_1$-$C_4$-Alkyl bedeuten, und dass $R_1$ und $R_3$ identisch sind und unabhängig jeweils Wasserstoff oder $C_1$-$C_4$-Alkyl bedeuten.

3. Verbindungen gemäss Anspruch 1 oder 2, **dadurch gekennzeichnet, dass** T und T' identisch sind und jeweils Fluor oder Chlor bedeuten.

4. Verbindungen gemäss einem der Ansprüche 1 bis 3, **dadurch gekennzeichnet, dass** V und V' unabhängig voneinander je für Amino, unsubstituiertes oder durch Hydroxy, Sulfo oder Sulfato substituiertes N-Mono- oder N, N-Di-$C_1$-$C_2$-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy, Sulfo oder Sulfato substituiertes N-$C_1$-$C_2$-Alkyl-N-phenylamino oder für Morpholino stehen.

5. Verbindungen gemäss einem der Ansprüche 1 bis 4, **dadurch gekennzeichnet, dass** V und V' unabhängig voneinander je für Amino, unsubstituiertes oder durch Sulfo substituiertes N-Mono- oder N,N-Di-$C_1$-$C_2$-Alkylamino, durch 1 bis 3 gleiche Reste aus der Gruppe Methyl, Methoxy und Sulfo substituiertes Phenylamino oder für 1 bis

3 Sulfogruppen tragendes 1- oder 2-Naphthylamino stehen.

**6.** Verbindungen gemäss einem der Ansprüche 1 bis 3, **dadurch gekennzeichnet, dass** V und V' unabhängig voneinander je für eine Gruppe der Formel

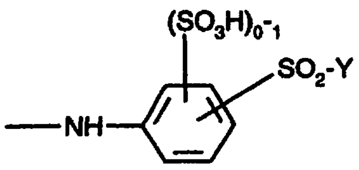

(3a),

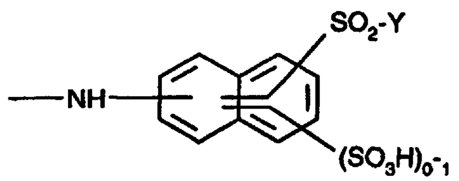

(3b),

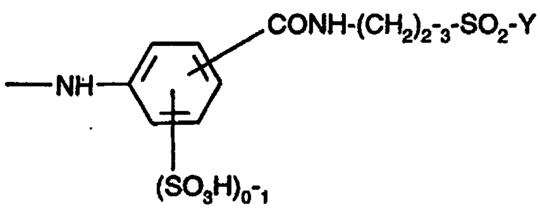

(3c)

oder

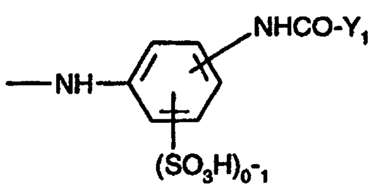

(3d)

stehen, worin Y Vinyl oder β-Sulfatoethyl und $Y_1$ $-CHBr-CH_2Br$ oder $-CBr=CH_2$ bedeuten.

**7.** Verbindungen gemäss Anspruch 1 der Formel (1), worin R, $R_1$, $R_2$ und $R_3$ unabhängig voneinander je Wasserstoff, Methyl oder Ethyl bedeuten, T und T unabhängig voneinander je Chlor oder Fluor bedeuten, V und V' unabhängig voneinander je Amino, unsubstituiertes oder durch Hydroxy, Sulfo oder Sulfato substituiertes N-Mono- oder N, N-Di-$C_1$-$C_2$-Alkylamino, Cyclohexylamino, unsubstituiertes oder durch Methyl, Methoxy, Carboxy oder Sulfo substituiertes Phenylamino oder Naphthylamino, unsubstituiertes oder im Alkylteil durch Hydroxy, Sulfo oder Sulfato substituiertes N-$C_1$-$C_2$-Alkyl-N-phenylamino, Morpholino oder einen Reaktivrest der Formel

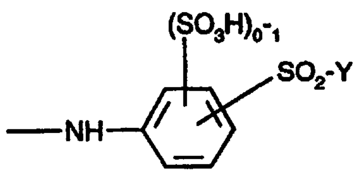

(3a),

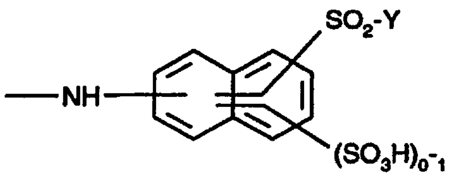

(3b),

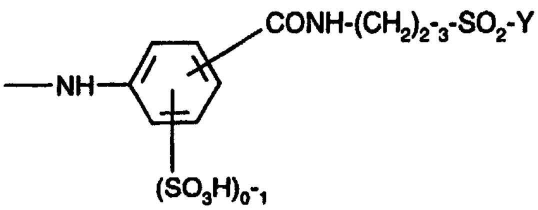

(3c)

oder

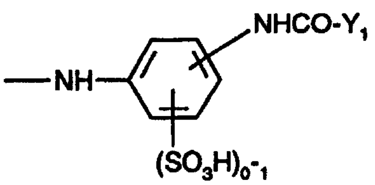

(3d)

,

worin Y β-Sulfatoethyl oder Vinyl und $Y_1$ die Gruppe $-CHBr-CH_2-Br$ oder $-CBr=CH_2$ sind, bedeuten, und n für die Zahl 1 steht.

**8.** Verbindungen gemäss Anspruch 1 der Formel

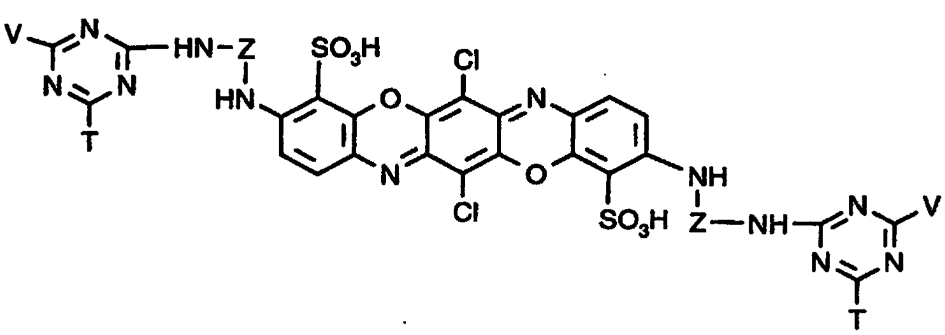

(1'),

worin Z ein verzweigter $C_3$-$C_6$-Alkylenrest ist, T für Chlor oder Fluor steht und V durch 1 bis 3 gleiche oder verschiedene Substituenten aus der Gruppe Sulfo, Methyl und Methoxy substituiertes Phenylamino oder durch 1 oder 2 Sulfogruppen substituiertes 2-Naphthylamino bedeutet.

**9.** Verfahren zur Herstellung von Verbindungen der Formel (1) gemäss Anspruch 1, **dadurch gekennzeichnet, dass** man eine Verbindung der Formel

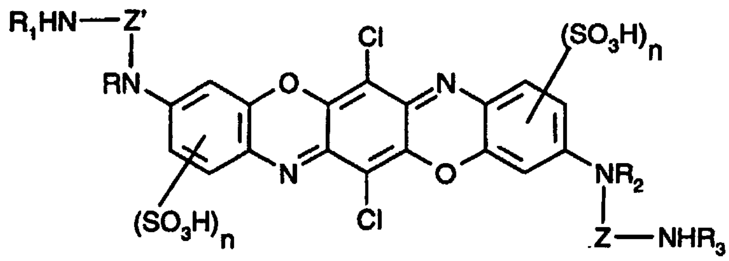

(4),

worin R, $R_1$, $R_2$, $R_3$, Z, Z' und n jeweils die im Anspruch 1 angegebene Bedeutung haben, in beliebiger Reihenfolge mit je in etwa 1 Mol-Aequivalent einer Verbindung der Formel

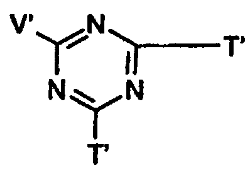

(5a)

und

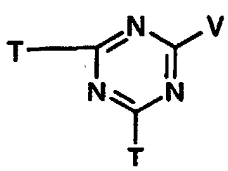

(5b)

worin T und T unabhängig voneinander je Fluor, Chlor oder Brom sind und V und V' jeweils die im Anspruch 1 angegebene Bedeutung haben, kondensiert und falls zutreffend, vor oder nach dieser Kondensation jeweils einen der beiden Reste T und T in einen anderen Rest T und/oder T' umwandelt.

**10.** Farbstoffgemisch enthaltend je eine Verbindung der Formel

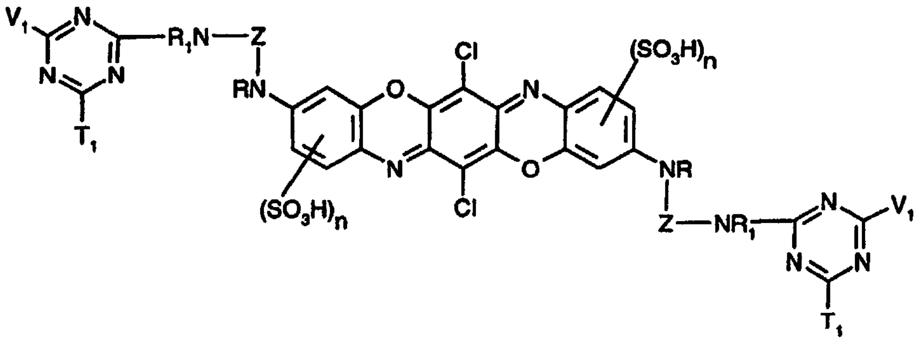

(1a),

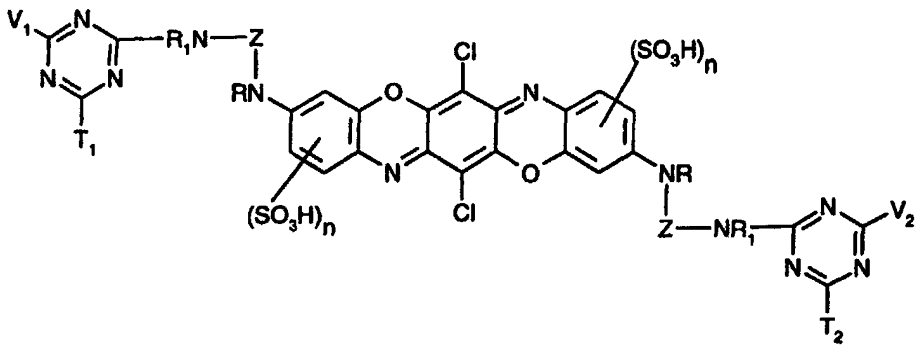

(1b)

und

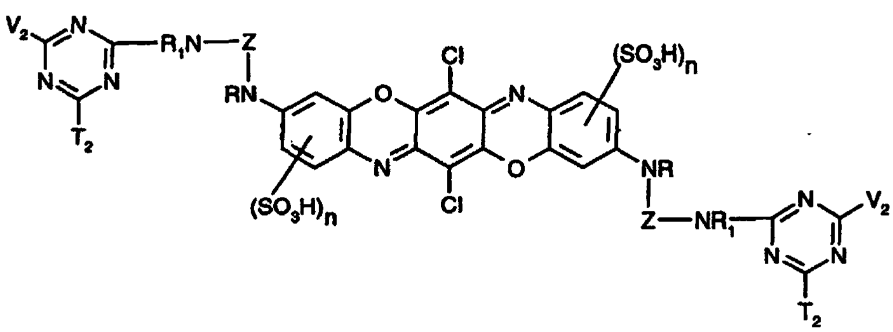

(1c),

worin R, $R_1$, Z und n jeweils die im Anspruch 1 angegebene Bedeutung haben, $V_1$ und $V_2$ unabhängig voneinander jeweils eine der im Anspruch 1 für V angegebenen Bedeutungen haben, und $T_1$ und $T_2$ unabhängig voneinander jeweils eine der im Anspruch 1 für T angegebenen Bedeutungen haben, und wobei $V_1$ und $V_2$ und/oder $T_1$ und $T_2$ verschieden voneinander sind.

**11.** Farbstoffgemisch gemäss Anspruch 10, enthaltend 5 bis 60 Gew.-% einer Verbindung der Formel (1a), 20 bis 75 Gew.-% einer Verbindung der Formel (1b) und 60 bis 5 Gew.-% einer Verbindung der Formel (1c), wobei die Summe der Verbindungen der Formeln (1a), (1b) und (1c) 100 Gew.-% beträgt, und worin Z verzweigtes $C_3$-$C_6$-Alkylen und n die Zahl 1 bedeuten, $T_1$ und $T_2$ gleich sind und je Fluor oder Chlor bedeuten, und $V_1$ und $V_2$ verschieden voneinander sind und je 2-, 3- oder 4-Sulfophenylamino, 2,4- oder 2,5-Disulfophenylamino oder einen faserreaktiven Rest 4-Vinylsulfonylphenylamino oder 4-β-Sulfatoethylsulfonylphenylamino bedeuten.

**12.** Verwendung von Verbindungen der Formel (1) oder von Farbstoffgemischen gemäss Anspruch 10 als Reaktivfarbstoffe zum Färben oder Bedrucken von hydroxylgruppenhaltigen oder stickstoffhaltigen Fasermaterialien.

**13.** Verwendung gemäss Anspruch 12, **dadurch gekennzeichnet, dass** man cellulosehaltige Fasermaterialien, insbesondere baumwollhaltige Fasermaterialien, färbt.

**14.** Verbindungen der Formel

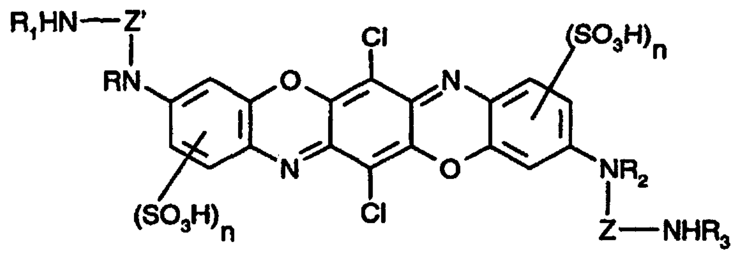

**(4),**

worin R, $R_1$, $R_2$, $R_3$, Z, Z' und n jeweils die im Anspruch 1 angegebene Bedeutung haben.

**Claims**

**1.** A compound of the formula

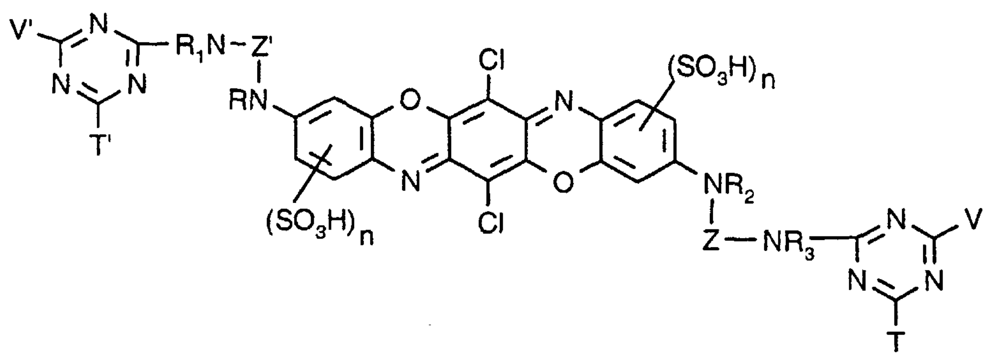

(1),

in which
R, $R_1$, $R_2$ and $R_3$ are each, independently of one another, hydrogen or unsubstituted or hydroxyl-, sulfo-, sulfato-, carboxyl-, cyano-, halogen-, $C_1$-$C_4$alkoxycarbonyl- or carbamoyl-substituted $C_1$-$C_6$alkyl,
Z and Z'are each, independently of one another, branched $C_3$-$C_6$alkylene,
T and T' are each, independently of one another, chlorine, fluorine, bromine, 3-carboxypyridin-1-yl or 3-carbamoylpyridin-1-yl,
V and V' are each, independently of one another, amino, unsubstituted or sulfo-, sulfato-, hydroxyl-, carboxyl- or phenyl-substituted N-$C_1$-$C_4$alkylamino or N,N-di-$C_1$-$C_4$alkylamino, cyclohexylamino, unsubstituted or $C_1$-$C_4$alkyl-, $C_1$-$C_4$alkoxy-, amino-, $C_2$-$C_4$alkanoylamino-, carboxyl-, sulfo- or halogen-substituted phenylamino or naphthylamino, N-$C_1$-$C_4$alkyl-N-phenylamino which is unsubstituted or substituted in the alkyl moiety by sulfo, sulfato, hydroxyl, carboxyl, or phenyl and/or in the phenyl moiety by $C_1$-$C_4$alkyl, $C_1$-$C_4$alkoxy, amino, $C_2$-$C_4$alkanoylamino, carboxyl, sulfo or halogen, or are morpholino or a reactive radical of the formula

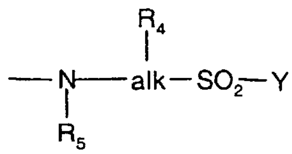

(2a)

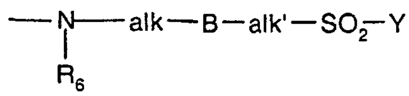

(2b)

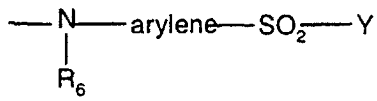

(2c)

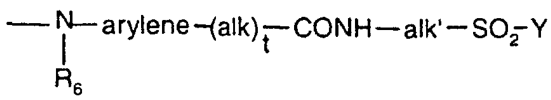

(2d)

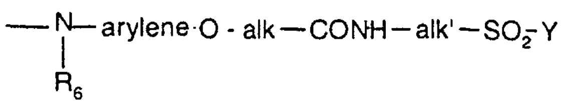

(2e)

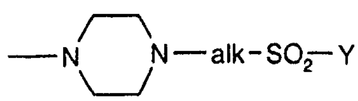

(2f)

or

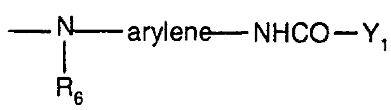

(2g)

$R_4$ is hydrogen, hydroxyl, sulfo, sulfato, carboxyl, cyano, halogen, $C_1$-$C_4$alkoxycarbonyl, carbamoyl or a group $-SO_2-Y$,

$R_5$ is hydrogen, unsubstituted or hydroxyl-, sulfo-, sulfato-, carboxyl- or cyano-substituted $C_1$-$C_4$alkyl, $R_6$ is hydrogen or $C_1$-$C_4$alkyl,

alk and alk' are each, independently of one another, $C_1$-$C_6$alkylene,

arylene is an unsubstituted or sulfo-, carboxyl-, hydroxyl-, $C_1$-$C_4$alkyl-, $C_1$-$C_4$alkoxy- or halogen-substituted phenylene or naphthylene radical,

Y is vinyl or a radical $-CH_2-CH_2-U$ and U is a leaving group,

$Y_1$ is a group $-CHX-CH_2X$ or $-CX=CH_2$,

X is chlorine or bromine,
B is a radical -O- or $-NR_6-$ in which $R_6$ is as defined above, and
n and t are each, independently of one another, 0 or 1.

2. A compound according to claim 1, wherein R and $R_2$ are identical and are each hydrogen or $C_1$-$C_4$alkyl and wherein $R_1$ and $R_3$ are identical and are each, independently of one another, hydrogen or $C_1$-$C_4$alkyl.

3. A compound according to claim 1 or 2, wherein T and T' are identical and are each fluorine or chlorine.

4. A compound according to any one of claims 1 to 3, wherein V and V' are each, independently of one another, amino, unsubstituted or hydroxyl-, sulfo- or sulfato- substituted N-mono- or N,N-di-$C_1$-$C_2$alkylamino, cyclohexylamino, unsubstituted or methyl-, methoxy-, carboxyl- or sulfo-substituted phenylamino or naphthylamino, N-$C_1$-$C_2$alkyl-N-phenylamino which is unsubstituted or substituted in the alkyl moiety by hydroxyl, sulfo or sulfato, or are morpholino.

5. A compound according to any one of claims 1 to 4, wherein V and V' are each, independently of one another, amino, unsubstituted or sulfo-substituted N-mono- or N,N-di-$C_1$-$C_2$alkylamino, phenylamino which is substituted by 1 to 3 identical radicals selected from the group consisting of methyl, methoxy and sulfo or are 1- or 2-naphthylamino which carries 1 to 3 sulfo groups.

6. A compound according to any one of claims 1 to 3, wherein V and V' are each, independently of one another, a group of the formula

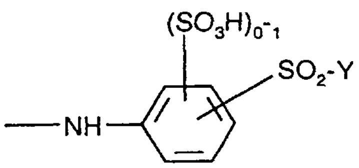

(3a),

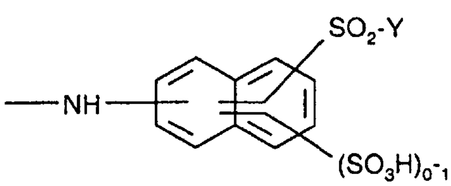

(3b),

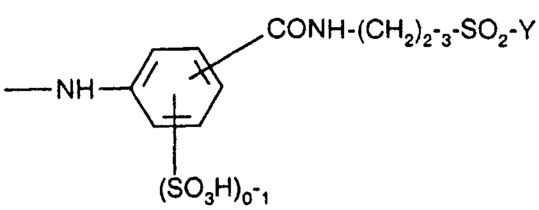

(3c)

or

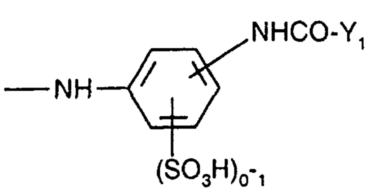

(3d)

,

in which Y is vinyl or β-sulfatoethyl and $Y_1$ is the group $-CHBr-CH_2Br$ or $-CBr=CH_2$.

**7.** A compound according to claim 1 of the formula (1), in which R, $R_1$, $R_2$ and $R_3$ are each, independently of one another, hydrogen, methyl or ethyl, T and T' are each, independently of one another, chlorine or fluorine, V and V' are each, independently of one another, amino, unsubstituted or hydroxyl-, sulfo- or sulfato- substituted N-mono- or N,N-di-$C_1$-$C_2$alkylamino, cyclohexylamino, unsubstituted or methyl-, methoxy-, carboxyl- oder sulfo-substituted phenylamino or naphthylamino, or are N-$C_1$-$C_2$alkyl-N-phenylamino which is unsubstituted or substituted in the alkyl moiety by hydroxyl, sulfo or sulfato, or are morpholino or a reactive radical of the formula

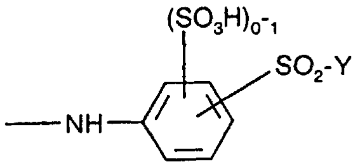

(3a),

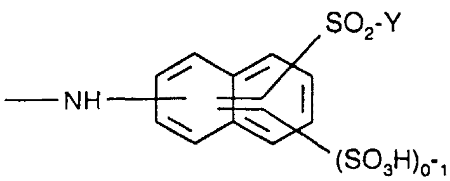

(3b).

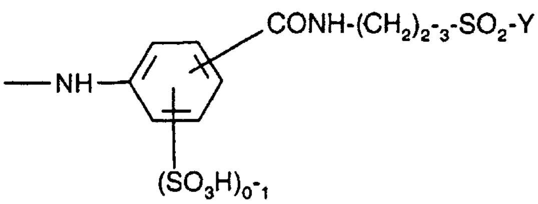

(3c)

or

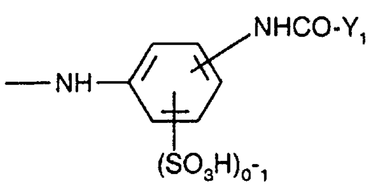

(3d)

,

in which Y is β-sulfatoethyl or vinyl and $Y_1$ is the group $-CHBr-CH_2Br$ or $-CBr=CH_2$, and n is 1.

**8.** A compound according to claim 1 of the formula

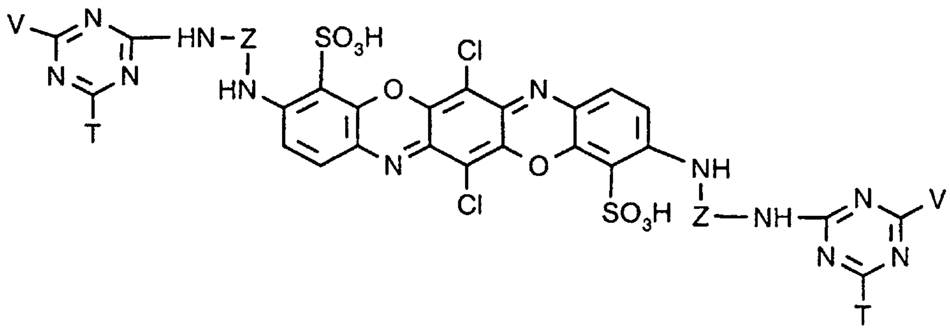

(1'),

in which Z is a branched $C_3$-$C_6$alkylene radical, T is chlorine or fluorine, and V is phenylamino which is substituted by 1 to 3 identical or different substituents selected from the group consisting of sulfo, methyl and methoxy or is 2-naphthylamino which is substituted by 1 or 2 sulfo groups.

**9.** A process for preparing a compound of the formula (1) according to claim 1, which comprises condensing a compound of the formula

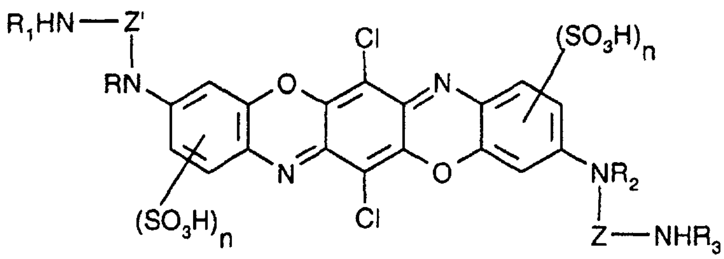

(4),

in which R, $R_1$, $R_2$, $R_3$, Z, Z' and n are each as defined in claim 1, with about 1 mole equivalent each of a compound of the formula

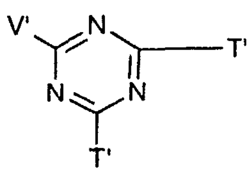

(5a)

and

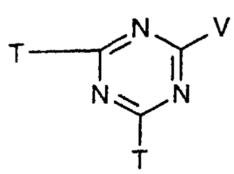

(5b)

,

in which T and T' are each, independently of one another, fluorine, chlorine or bromine and V and V' are each as defined in claim 1, in any desired order and, where appropriate, converting one of the two radicals T and T' into another radical T and/or T', respectively, before or after this condensation.

**10.** A dye mixture, comprising one compound each of the formula

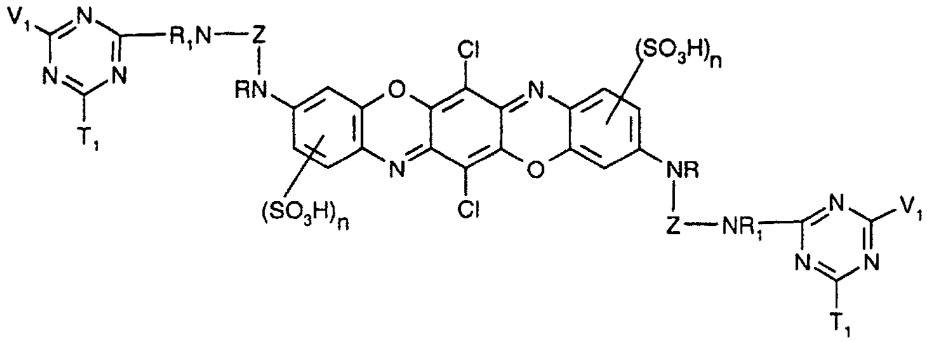

(1a),

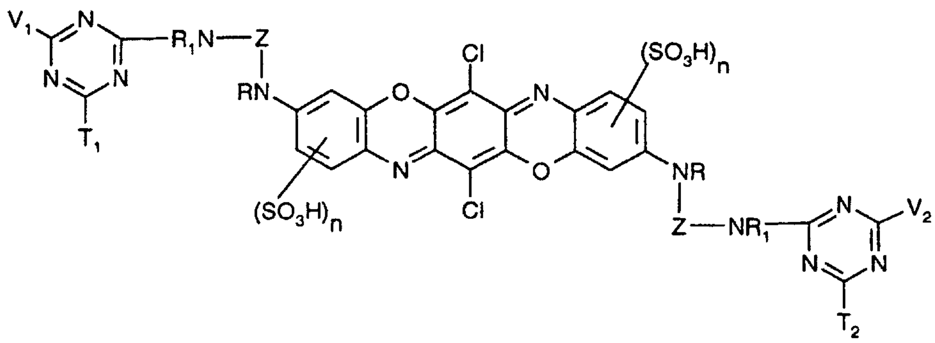

(1b)

and

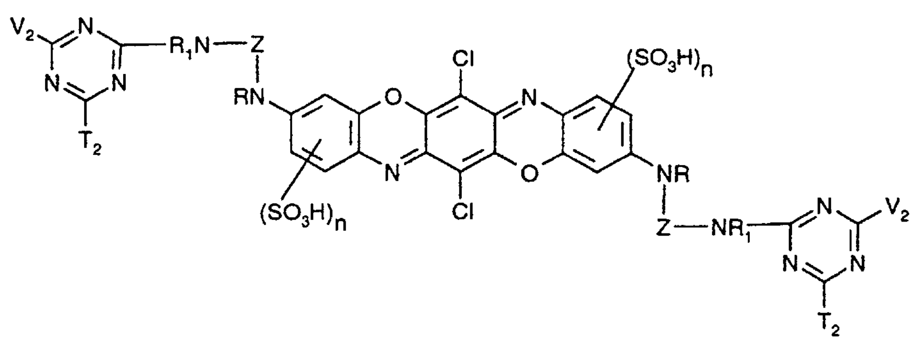

(1c),

in which R, $R_1$, Z and n are each as defined in claim 1, $V_1$ and $V_2$ each have, independently of one another, one of the meanings given in claim 1 for V, and $T_1$ and $T_2$ each have, independently of one another, one of the meanings given in claim 1 for T, $V_1$ and $V_2$ and/or $T_1$ and $T_2$ being different from one another.

**11.** A dye mixture according to claim 10, comprising 5 to 60% by weight of a compound of the formula (1a), 20 to 75% by weight of a compound of the formula (1b) and 60 to 5% by weight of a compound of the formula (1c), the sum of the compounds of the formulae (1a), (1b) and (1c) being 100% by weight, in which Z is branched $C_3$-$C_6$alkylene and n is 1, $T_1$ and $T_2$ are identical and are each fluorine or chlorine, and $V_1$ and $V_2$ are different from one another and are each 2-, 3- or 4-sulfophenylamino, 2,4- or 2,5-disulfophenylamino or a 4-vinylsulfonylphenylamino or 4-β-sulfatoethylsulfonylphenylamino fibre-reactive radical.

**12.** Use of a compound of the formula (1) or of a dye mixture according to claim 10 as reactive dye for dyeing or printing hydroxyl-containing or nitrogen-containing fibre materials.

**13.** Use according to claim 12, wherein cellulose-containing fibre materials, in particular cotton-containing fibre materials, are dyed.

**14.** A compound of the formula

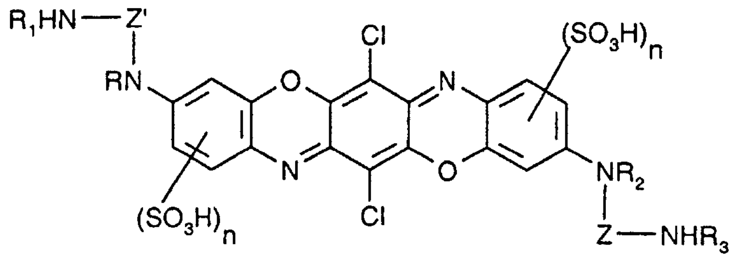

(4) ,

in which R, $R_1$, $R_2$, $R_3$, Z, Z' and n are each as defined in claim 1.

**Revendications**

**1.** Composés de formule

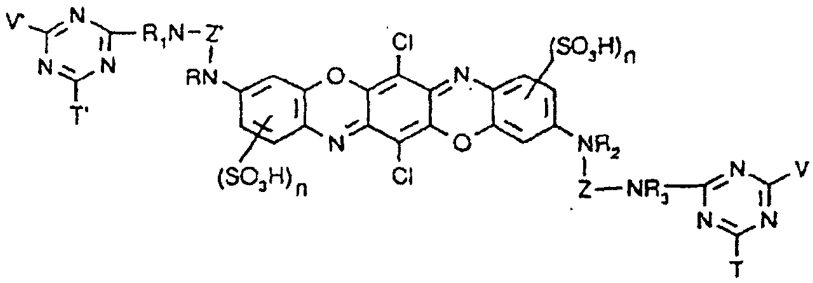

(1),

où

| | |
|---|---|
| R, $R_1$, $R_2$ et $R_3$ | représentent chacun, indépendamment les uns des autres, un atome d'hydrogène ou un groupe alkyle en $C_1$-$C_6$ éventuellement substitué par des substituants hydroxy, sulfo sulfato, carboxy, cyano, halogène, (alkoxy en $C_1$-$C_4$)carbonyle ou carbamoyle, |
| Z et Z' | représentent chacun, indépendamment l'un de l'autre, un groupe alkylène en $C_3$-$C_6$ ramifié, |
| T et T' | représentent chacun, indépendamment l'un de l'autre des atomes de chlore, de fluor, de brome, des groupes 3-carboxypyridin-1-yle ou 3-carbamoylpyridin-1-yle, |
| V et V' | représentent chacun, indépendamment l'un de l'autre, des groupes amino ; N-(alkyl en $C_1$-$C_4$)-amino ou N,N-di-(alkyl en $C_1$-$C_4$)-amino non substitué ou substitué par des substituants sulfo, sulfato, hydroxy, carboxy ou phényle ; cyclohexylamino ; phénylamino ou naphtylamino non substitué ou substitué par des substituants alkyle en $C_1$-$C_4$, alkoxy en $C_1$-$C_4$, amino, (alcanoyl en $C_2$-$C_4$)amino, carboxy, sulfo ou halogène ; N-(alkyl en $C_1$-$C_4$)-N-phénylamino non substitué ou substitué dans le fragment alkyle par des substituants sulfo, sulfato, hydroxy, carboxy ou phényle et/ou dans le fragment phényle par des substituants alkyle en $C_1$-$C_4$, alkoxy en $C_1$-$C_4$, amino, (alcanoyl en $C_2$-$C_4$)amino, carboxy, sulfo ou halogène ; morpholino ; ou un reste réactif de formule |

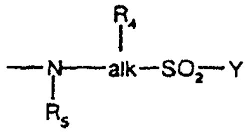

(2a)

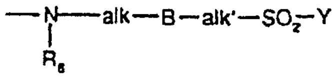

(2b)

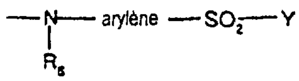

(2c)

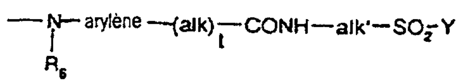

(2d)

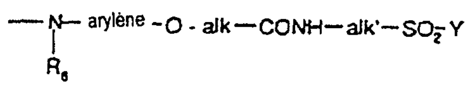

(2e)

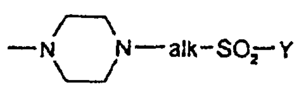

(2f)

ou

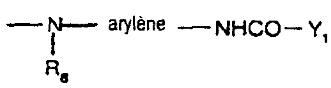

(2g)

| | |
|---|---|
| $R_4$ | représente un atome d'hydrogène, des groupes hydroxy, sulfo, sulfato, carboxy, cyano, halogène, (alkoxy en $C_1$-$C_4$)carbonyle, carbamoyle ou un groupe de formule $-SO_2-Y$, |
| $R_5$ | représente un atome d'hydrogène, un groupe alkyle en $C_1$-$C_4$ éventuellement substitué par des substituants hydroxy, sulfo, sulfato, carboxy ou cyano, |
| $R_6$ | représente un atome d'hydrogène ou un groupe alkyle en $C_1$-$C_4$, |
| alk et alk' | représentent chacun, indépendamment l'un de l'autre, un groupe alkylène en $C_1$-$C_6$, |
| arylène | représente un reste phénylène ou naphtylène non substitué ou substitué par des substituants sulfo, carboxy, hydroxy, alkyle en $C_1$-$C_4$, alkoxy en $C_1$-$C_4$ ou halogène, |
| Y | représente un groupe vinyle ou un reste $-CH_2-CH_2-U$ et U est un groupe partant, |
| $Y_1$ | représente un groupe $-CHXCH_2X$ ou $-CX=CH_2$, |
| X | représente un atome de chlore ou de brome, |
| B | représente un reste -O- ou $-NR_6-$, où $R_6$ possède la signification donnée ci-dessus, et |

n et t valent chacun, indépendamment l'un de l'autre, 0 ou 1.

2. Composés selon la revendication 1, **caractérisés en ce que** R et $R_2$ sont identiques et représentent chacun un atome d'hydrogène ou un groupe alkyle en $C_1$-$C_4$, et **en ce que** $R_1$ et $R_3$ sont identiques et représentent chacun indépendamment un atome d'hydrogène ou groupe alkyle en $C_1$-$C_4$.

3. Composés selon la revendication 1 ou 2, **caractérisés en ce que** T et T' sont identiques et représentent chacun un atome de fluor ou de chlore.

4. Composés selon l'une des revendications 1 à 3, **caractérisés en ce que** V et V' représentent chacun, indépendamment l'un de l'autre, des groupes amino, N-mono- ou N,N-di(alkyl en $C_1$-$C_2$)-amino non substitué ou substitué par des substituants hydroxy, sulfo ou sulfato, cyclohexylamino, naphtylamino ou phénylamino non substitué ou substitué par des substituants méthyle, méthoxy ou sulfo, N-(alkyl en $C_1$-$C_2$)-N-phénylamino non substitué ou substitué dans le fragment alkyle par des substituants hydroxy, sulfo ou sulfato ou morpholino.

5. Composés selon l'une des revendications 1 à 4, **caractérisés en ce que** V et V' représentent chacun, indépendamment l'un de l'autre, des groupes amino, N-mono- ou N,N-di(alkyl en $C_1$-$C_2$)-amino non substitué ou substitué par un substituant sulfo, phénylamino substitué par 1 à 3 restes identiques pris dans le groupe comprenant méthyle, méthoxy et sulfo ou 1- ou 2-naphtylamino portant 1 à 3 groupes sulfo.

6. Composés selon l'une des revendications 1 à 3, **caractérisés en ce que** V et V' représentent chacun, indépendamment l'un de l'autre, un groupe de formule

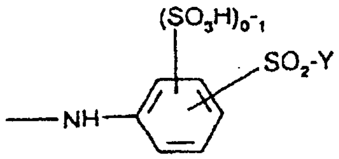

(3a),

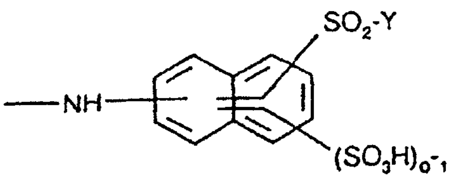

(3b),

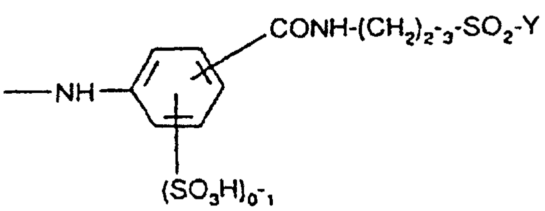

(3c)

ou

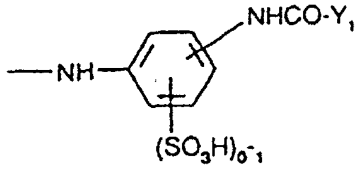

(3d)

où Y représente un groupe vinyle ou β-sulfatoéthyle et $Y_1$ représente un groupe $-CHBr-CH_2Br$ ou $CBr=CH_2$.

**7.** Composés selon la revendication 1 de formule (1) où R, $R_1$, $R_2$ et $R_3$ représentent chacun, indépendamment les uns des autres, des atomes d'hydrogène, des groupes méthyle ou éthyle, T et T' représentent chacun, indépendamment l'un de l'autre, des atomes de chlore ou de fluor, V et V' représentent chacun, indépendamment l'un de l'autre, des groupes amino, N-mono- ou N,N-di(alkyl en $C_1$-$C_2$)-amino non substitué ou substitué par des substituants hydroxy, sulfo ou sulfato, cyclohexylamino, naphtylamino ou phénylamino non substitué ou substitué par des substituants méthyle, méthoxy ou sulfo, N-(alkyl en $C_1$-$C_2$)-N-phénylamino non substitué ou substitué dans le fragment alkyle par des substituants hydroxy, sulfo ou sulfato, morpholino ou un reste réactif de formule

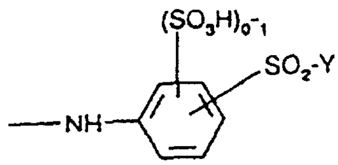

(3a),

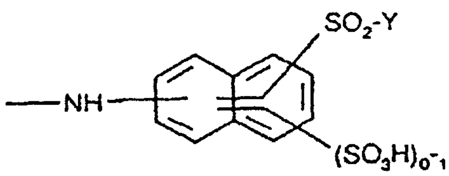

(3b),

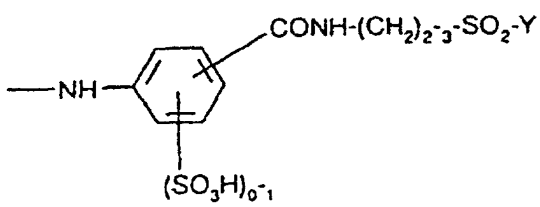

(3c)

ou

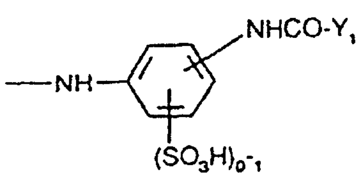

(3d)

où Y représente un groupe β-sulfatoéthyle ou vinyle et $Y_1$ représente le groupe $-CHBr-CH_2-Br$ ou $-CBr=CH_2$, et n vaut 1.

**8.** Composés selon la revendication 1 de formule

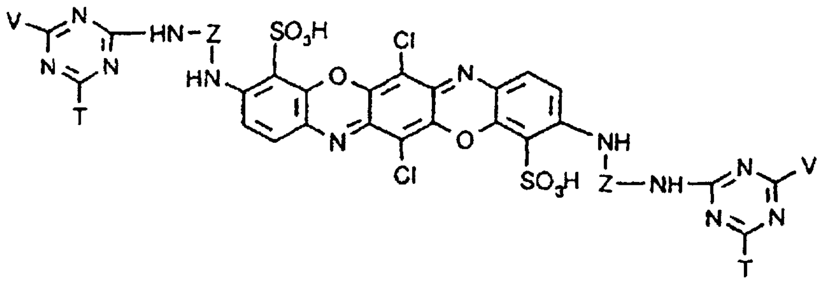

(1'),

où Z représente un reste alkylène en $C_3$-$C_6$ ramifié, T représente un atome de chlore ou de fluor et V représente un groupe phénylamino substitué par 1 à 3 substituants identiques ou différents pris dans le groupe comprenant sulfo, méthyle et méthoxy ou un groupe 2-naphtylamino substitué par 1 ou 2 groupes sulfo.

**9.** Procédé pour la préparation de composés de formule (1) selon la revendication 1, **caractérisé en ce qu'**on condense un composé de formule

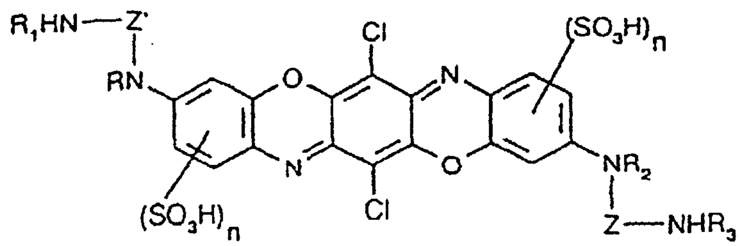

(4),

où R, $R_1$, $R_2$, $R_3$, Z, Z' et n possèdent chacun la signification donnée à la revendication 1, dans une succession quelconque, sur environ 1 équivalent molaire d'un composé de formule

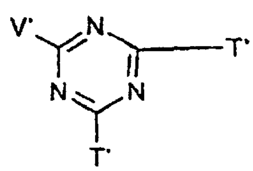

(5a)

et

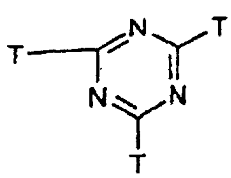

(5c)

,

où T et T' représentent chacun, indépendamment l'un de l'autre, des atomes de fluor, de chlore ou de brome et V et V' possèdent chacun la signification donnée à la revendication 1, et si approprié, avant ou après cette condensation, on transforme chaque fois un des deux restes T et T' en un autre reste T et/ou T'.

**10.** Mélange de colorants content chaque fois un composé de formule

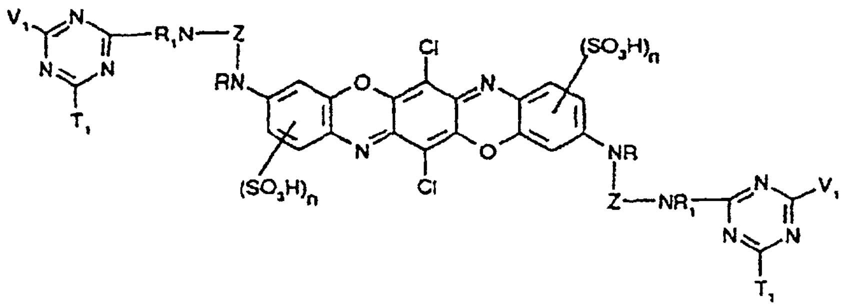

(1a),

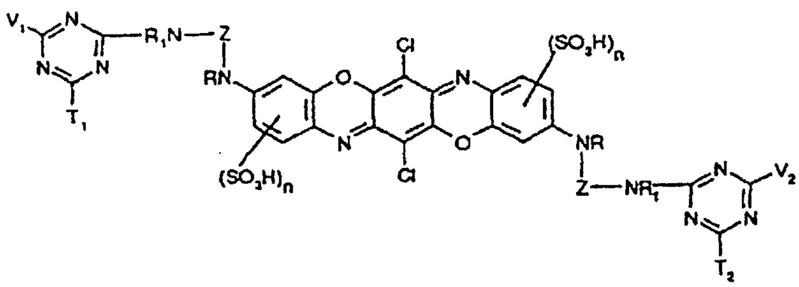

(1b)

et

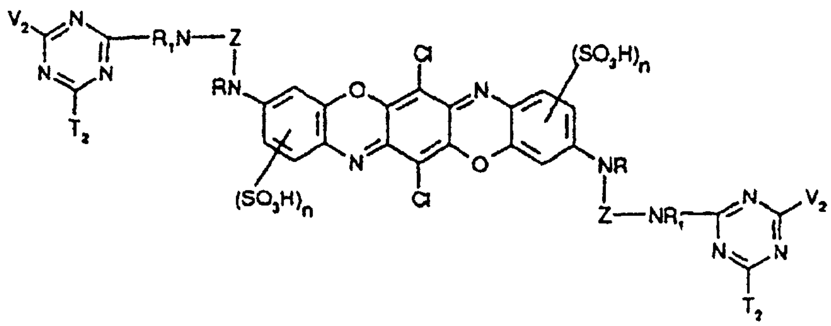

(1c),

où R, $R_1$, Z et n possèdent chacun la signification donnée à la revendication 1, $V_1$ et $V_2$ possèdent chacun, indépendamment l'un de l'autre, l'une des significations données pour V à la revendication 1, et $T_1$ et $T_2$ possèdent chacun, indépendamment l'un de l'autre, l'une des significations données pour T à la revendication 1, et $V_1$ et $V_2$ et/ou $T_1$ et $T_2$ sont différents.

**11.** Mélange de colorants selon la revendication 10, contenant de 5 à 60 % en poids d'un composé de formule (1a), de 20 à 75 % en poids d'un composé de formule (1b) et de 60 à 5 % en poids d'un composé de formule (1c), la somme des composés de formules (1a), (1b) et (1c) étant de 100 % en poids, et où Z représente un groupe alkylène en $C_3$-$C_6$ et n vaut 1, $T_1$ et $T_2$ sont identiques et chacun représente un atome de fluor ou de chlore, et $V_1$ et $V_2$ sont différents l'un de l'autre et chacun représente un groupe 2-, 3- ou 4-sulfophénylamino, 2,4- ou 2,5-disulfophénylamino ou un reste réactif sur la fibre 4-vinylsulfonylphénylamino ou 4-β-sulfatoéthylsulfonylphénylamino.

**12.** Utilisation de composés de formule (1) ou de mélanges de colorants selon la revendication 10 en tant que colorants réactifs pour la teinture ou l'impression de matières fibreuses azotées ou présentant des groupes hydroxyle.

**13.** Utilisation selon la revendication 12, **caractérisée en ce qu'**on teint des matières fibreuses cellulosiques, en particulier des matières fibreuses contenant du coton.

**14.** Composé de formule

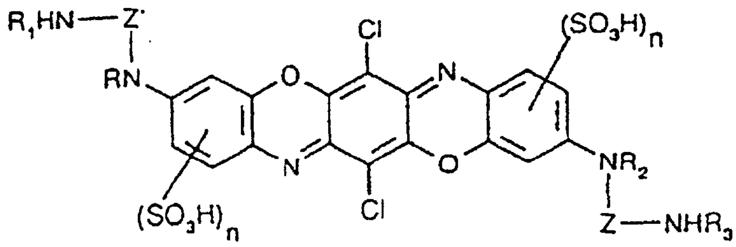

(4),

où R, $R_1$, $R_2$, $R_3$, Z, Z' et n possèdent chacun la signification donnée à la revendication 1.